# FASCICULE DE BREVET EUROPEEN

(11) **EP 3 532 108 B1**
(45) Date de publication et mention de la délivrance du brevet: **19.01.2022**
(21) Numéro de dépôt: 17797700.6
(22) Date de dépôt: 24.10.2017
(51) Int. Cl.: A61L 15/58, C09J 11/08, C09J 175/08

(54) **COMPOSITION AUTO-ADHÉSIVE POUR LE COLLAGE DE SUBSTRATS DE BASSE ÉNERGIE DE SURFACE**
SELBSTKLEBENDE ZUSAMMENSETZUNG ZUM VERBINDEN VON SUBSTRATEN MIT GERINGER OBERFLÄCHENENERGIE
SELF-ADHESIVE COMPOSITION FOR THE BONDING OF SUBSTRATES WITH LOW SURFACE ENERGY

(30) Priorité: 28.10.2016 FR 1660509
(43) Date de publication de la demande: 04.09.2019
(73) Titulaire: BOSTIK SA, 92700 Colombes (FR)
(72) Inventeur: GOUBARD, David, 67000 Strasbourg (FR); LAFERTE, Olivier, 60350 Trosly Breuil (FR)
(74) Mandataire: Arkema Patent
(86) Numéro de dépôt international: PCT/FR2017/052925
(87) Numéro de publication internationale: WO 2018/078271

(56) Documents cités:
- EP-A1- 2 889 348
- EP-A1- 2 889 349
- WO-A1-2013/136108

## Description

### DOMAINE DE L'INVENTION

La présente invention a pour objet une composition adhésive thermofusible comprenant un mélange de polymères silylés, une résine tackifiante et un catalyseur, dans des teneurs particulières, ayant des propriétés auto-adhésives après réticulation à l'humidité.

La présente invention a également pour objet un article auto-adhésif, tel qu'un système multicouche auto-adhésif, comprenant une couche support et au moins une couche auto-adhésive obtenue après réticulation à l'humidité de la composition adhésive selon l'invention.

La présente invention a également pour objet l'utilisation de la composition adhésive selon l'invention à l'état réticulé et de l'article auto-adhésif selon l'invention pour le collage de substrats de basse énergie de surface, en particulier de substrats plastiques, notamment de substrats thermoplastiques de basse énergie de surface.

### ARRIERE-PLAN TECHNOLOGIQUE DE L'INVENTION

Les adhésifs thermofusibles (souvent désignés sous l'appellation anglaise de "Hot Melt adhesives" ou HM) sont des substances solides à température ambiante qui ne contiennent ni eau ni solvant. Ils sont appliqués à l'état fondu et se solidifient lors du refroidissement, formant ainsi un joint qui assure la fixation des substrats à assembler. Certains Hot Melt sont formulés de manière à conférer au support qui en est revêtu un caractère relativement dur et dénué de tack. D'autres Hot Melt assurent au support un caractère relativement mou et un tack important: ce sont des PSA qui sont largement utilisés pour la fabrication d'étiquettes auto-adhésives; les adhésifs correspondants sont désignés par l'appellation d' "adhésifs thermofusibles sensibles à la pression" ou encore, en anglais, par celle de "Hot Melt Pressure Sensitive Adhesive" (ou HMPSA).

Les adhésifs sensibles à la pression (également dénommés colles auto-adhésives ou encore, en anglais, "Pressure Sensitive Adhesives" ou PSA) sont des substances conférant à la couche support qui en est revêtue un pouvoir collant (ou pégosité) immédiat à température ambiante (souvent désigné sous le terme de "tack"), lequel permet son adhésion instantanée au substrat sous l'effet d'une pression légère et brève. Les PSA sont largement utilisés pour la fabrication d'étiquettes ou de films auto-adhésifs qui sont fixés sur des produits à des fins de présentation d'informations (telles que code barre, dénomination, prix) et/ou à des fins décoratives, que ce soit lors de collages définitifs ou temporaires. Les PSA sont également mis en oeuvre dans l'étiquetage durable de pièces électriques, électroniques, ou mécaniques, pour lesquelles l'information requiert d'être fixée sur de longues périodes de temps - plusieurs années - et/ou dans des conditions d'utilisation difficile en présence de solvants, de produits chimiques, de lumière naturelle ou artificielle, de rayonnements, avec des mouvements et des déformations générés de façon régulière ou occasionnelle, par la force humaine ou de machines. Les PSA sont également mis en oeuvre pour la fabrication de rubans auto-adhésifs d'utilisations variées. On peut citer par exemple outre le ruban adhésif transparent largement utilisé dans la vie quotidienne, leur utilisation dans la construction d'objets ou d'immeubles, dans diverses applications industrielles ; telles que la mise en forme et l'assemblage d'emballages en carton ; la protection de surfaces pour les travaux de peinture dans la construction ; le maintien de câbles électriques dans l'industrie des transports ; le collage des moquettes par rubans adhésifs à double face ; l'assemblage d'éléments ou d'équipements dans l'industrie automobile, la construction, l'industrie textile, l'industrie du bois et des plastiques ; l'assemblage d'appareils électriques ou électroniques, d'outils et d'équipements professionnels ou grand public.

En vue de la fabrication de systèmes multicouches et en particulier d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en g/m²) désignée ci-après par le terme de "grammage". La couche support est constituée de papier ou de film d'un matériau polymère à une ou plusieurs couches. La couche d'adhésif qui recouvre la couche support peut elle-même être recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur la surface du substrat à revêtir soit manuellement, soit à l'aide d'étiqueteuses sur des chaînes automatisées de conditionnement.

Ces systèmes multicouches peuvent également être transformés en rubans auto-adhésifs par découpe et conditionnement en rouleaux de largeur et de longueur déterminée.

Les PSA permettent généralement, en raison de leur pégosité (« tack en anglais) élevée à température ambiante, une prise ou une accroche rapide de l'étiquette et/ou du ruban auto-adhésifs sur le substrat à revêtir, propre à l'obtention de cadences de production industrielle importantes.

La nature de la surface d'un substrat peut être caractérisée par son énergie de surface. Celle-ci peut être quantifiée de manière bien connue par l'homme du métier à partir de la mesure de l'angle de contact et calculée selon le modèle d'Owens & Wendt.

A état de surface comparable, une composition PSA convenant au collage sur des substrats d'énergie de surface (ou tension de surface) élevée, tels que le verre ou les métaux qui sont des substrats polaires inorganiques, ne conviendra pas nécessairement au collage sur des substrats de basse énergie de surface, tels que des substrats comprenant des matériaux polymériques à base de monomères et co-monomères de type éthylène ou propylène, substrats communément appelés respectivement polyéthylène (PE) et polypropylène (PP), qui sont des substrats organiques apolaires. Entrent également dans la catégorie des substrats de basse énergie de surface, les matériaux polymériques à base d'autres monomères oléfiniques, et en général tous revêtements sur des films ou des objets, qui se révèlent difficiles à coller avec des PSA.

Les substrats de basse énergie de surface, tels que mentionnés ci-dessus, sont connus pour être difficiles à coller et nécessitent souvent de traiter spécifiquement ladite surface avant d'y contrecoller la partie auto-adhésive de l'étiquette ou du ruban adhésif. Ces traitements sont bien connus de l'homme du métier et consistent à modifier chimiquement et/ou physiquement la surface du substrat, pour accroitre l'énergie superficielle et/ou la rugosité de ladite surface, et ainsi améliorer l'adhérence de l'adhésif sur le substrat. A titre d'exemple, on peut traiter la surface du substrat par un traitement plasma ou corona, une abrasion ou encore l'application sur ladite surface à traiter d'un agent chimique d'accroche (dit aussi primaire), afin de modifier favorablement l'énergie de surface du substrat.

Sans de tels traitements de surface, l'adhérence de la couche adhésive sur un substrat de ce type, est souvent insuffisante pour fixer de façon efficace l'étiquette ou le ruban adhésif sur la surface dudit substrat. L'efficacité d'un tel collage est à considérer selon le type d'application visée. Typiquement, il est souhaitable que le joint adhésif assurant la fixation des deux objets présente une résistance minimale face à l'une ou plusieurs des contraintes suivantes : pelage, arrachage, ou cisaillement. Il est également souhaitable que ces propriétés soient maintenues dans un large domaine de température, notamment lorsque le joint adhésif (de même, par conséquent, que le produit revêtu de l'étiquette et/ou ruban adhésif) est susceptible d'être soumis à des variations de températures, par exemple durant le transport, le stockage et l'application. Il est également souhaitable que ces propriétés avantageuses ne soient pas dégradées dans le temps ou soient du moins maintenues pendant un temps suffisant long, lié par exemple à l'utilisation ou la durée de vie de l'article auto-adhésif ou du produit revêtu dudit article auto-adhésif. Dans certaines applications, un certain profil de rupture du joint adhésif est recherché par rapport à la surface du substrat. On recherche préférentiellement une rupture du joint de colle homogène plutôt que saccadée.

Il est par exemple connu de la demande de brevet FR3015984 des articles auto-adhésifs comportant une couche support conformable de type mousse, pouvant être obtenus à partir de compositions adhésives à base d'un polyéther ou polyuréthane silylé(s) ou à base d'un mélange de polyéthers ou polyuréthanes silylés particuliers.

Ces articles auto-adhésifs sont décrits comme pouvant être appliqués sur de nombreuses surfaces, incluant des matériaux plastiques ou des surfaces présentant des propriétés comparables aux propriétés de la couche support.

Le document EP 2889348 A1 concerne notamment un article auto-adhésif comprenant une couche support de type mousse ou analogue et une couche adhésive obtenue par réticulation d'une composition adhésive. Cette composition adhésive comprend au moins un polymère ou un mélange de polymères choisis parmi les polyuréthanes et les polymères présentant un, deux ou trois groupements terminaux de mono-, di-, et tri-alkoxysilane, au moins une résine tackifiante et au moins un catalyseur de réticulation.

Le document EP 2889349 A1 concerne notamment un article auto-adhésif comprenant une couche support de type mousse ou analogue et une couche adhésive obtenue par réticulation d'une composition adhésive. Cette composition adhésive comprend au moins un polymère ou un mélange de polymères présentant au moins 20 % de fonctions silyles dialkoxylées, au moins une résine tackifiante et au moins un catalyseur de réticulation.

Le document WO 2013/136108 A1 concerne notamment une composition adhésive comprenant au moins un polymère comprenant du silicium, au moins une résine tackifiante et au moins un catalyseur, la composition étant utilisée pour fabriquer un article auto-adhésif respirable.

Toutefois, il s'est avéré que les compositions adhésives exemplifiées dans ces demandes ne donnent pas entière satisfaction et restent à améliorer, en termes de performances adhésives ou d'efficacité de collage, sur des substrats de basse énergie de surface.

Or dans certains domaines d'application des PSA, il est peu souhaitable de recourir aux traitements de surface sus-mentionnés pour pallier aux faibles performances adhésives de la composition adhésive vis-à-vis de ces substrats. En effet, un des inconvénients de ces traitements est qu'il induit une étape supplémentaire dans le procédé de fabrication de produits revêtus d'un article auto-adhésif, générant ainsi des coûts et contraintes supplémentaires dans les lignes de production de ces produits. En outre, ces traitements en modifiant les propriétés physico-chimiques de la surface des substrats peuvent conduire à une fragilisation de la surface du substrat ou encore induire des effets esthétiquement indésirables tels qu'une perte de transparence ou une modification de la couleur superficielle du substrat, qui peuvent être gênants lorsque la couche support de l'article auto-adhésif est par exemple transparente ou translucide, la surface du substrat étant ainsi visible. Ces traitements peuvent également conduire à des surfaces hétérogènes, des collages peu reproductibles, et peu durables, pouvant nécessiter de prétraiter de nouveau la surface du substrat avant d'y apposer la partie adhésive de l'article auto-adhésif.

Ainsi, depuis quelques années, de nouvelles solutions de collage auto-adhésives adaptées à la fabrication d'étiquettes auto-adhésives convenant au collage sur substrats de basse énergie de surface sont apparues.

On connait par exemple des compositions adhésives sensibles à la pression à base de polymères (ou copolymères) de type acrylate, telles que décrites dans la demande de brevet EP 2310470 de 3M.

Toutefois, la préparation de ces polymères et leur mise en oeuvre dans la formulation de ces compositions adhésives nécessite d'utiliser une quantité importante de solvant qui s'avère contraignante pour la production d'article auto-adhésif car cela nécessite une étape supplémentaire d'élimination du solvant et/ou le cas échéant des installations particulières dédiées. En outre, l'utilisation de polymères acryliques présente également l'inconvénient de générer des odeurs désagréables en raison de la présence de monomères résiduels ou de solvants résiduels.

Ainsi, il existe un besoin de mettre au point de nouvelles compositions adhésives sensibles à la pression capables de coller sur tout type de surface, y compris des surfaces de substrats de basse énergie de surface réputées difficiles à coller, sans présenter tout ou partie des inconvénients de l'art antérieur.

Il a maintenant été trouvé que la composition objet de la présente demande permet de coller plus efficacement sur tout type de surface, y compris des substrats de basse énergie de surface et ce, quel que soit son état de surface.

En particulier, la composition adhésive selon l'invention possède, à l'état réticulé, des performances adhésives améliorées, notamment en terme de cohésion, sur des surfaces de substrats de basse énergie de surface, à état de surface comparable, par rapport aux compositions adhésives sensibles à la pression de l'art antérieur à base de polymère disilylé seul (c'est-à-dire ne comprenant pas de polymère monosilylé).

En particulier, la composition adhésive selon l'invention possède, à l'état réticulé, d'excellentes performances d'adhésion pour le collage de surfaces de substrats à base de plastique de basse énergie de surface, de préférence au moins comparables aux performances mesurées pour les solutions auto-adhésives actuelles de type acryliques.

En particulier, la composition adhésive selon l'invention possède, à l'état réticulé, une force d'adhésion mesurée selon le test de pelage à 180° d'au moins 3N/cm, de préférence d'au moins 3,5N/cm, plus préférentiellement d'au moins 4N/cm, sur un substrat présentant une énergie de surface inférieure ou égale à 40mN/m, et notamment un substrat plastique de type polyoléfine, tel que HDPE et PP.

En particulier, la composition adhésive selon l'invention permet en outre de fabriquer des articles auto-adhésifs capables d'adhérer rapidement et durablement sur de telles surfaces.

En particulier, la composition adhésive selon l'invention est facile à mettre en oeuvre et permet de fabriquer des articles auto-adhésifs sur des lignes de production présentant des vitesses de ligne élevée.

Dans la présente demande, on entend par substrat de basse énergie de surface, un substrat possédant au moins une surface présentant une énergie superficielle, mesurée à 23°C à 50% d'humidité relative, sous pression atmosphérique d'1 bar, dans l'air, inférieure ou égale à 40 millinewtons par mètre (mN/m) ou millijoules par mètre carré (mJ/m²). L'énergie de surface d'un substrat peut être quantifiée de manière bien connue par l'homme du métier à partir de la mesure de l'angle de contact et calculée selon le modèle d'Owens & Wendt.

Les substrats de basse énergie de surface sur lesquels l'adhésif selon l'invention est destiné à être appliqué présentent de préférence une énergie de surface allant de 23 à 38 mN/m (ou mJ/m²), plus préférentiellement allant de 25 à 35 mN/m.

### RESUME DE L'INVENTION

La présente invention a donc pour objet en premier lieu une composition adhésive comprenant :
A.1) au moins 4% en poids d'un ou plusieurs polymères polysilylés possédant une masse moléculaire moyenne en nombre (Mn) d'au moins 6 000 g/mol, et choisi parmi les polymères comprenant une chaine principale de type polyéther et/ou polyuréthane et au moins deux groupements terminaux silylés hydrolysables, lesdits groupements terminaux silylés étant rattachés à la chaine principale du polymère par une fonction uréthane ou éther (dit groupe connecteur), et
A.2) au moins 13% en poids d'un ou plusieurs polymères monosilylés possédant une masse moléculaire moyenne en nombre (Mn) d'au moins 1000 g/mol, et choisi parmi les polymères comprenant une chaine principale de type polyéther et/ou polyuréthane et un groupement terminal silylé hydrolysable, ledit groupement terminal silylé étant rattaché à la chaine principale du polymère par une fonction uréthane ou éther (dit groupe connecteur),
B) au moins 25% en poids d'une ou plusieurs résine tackifiante présentant (chacune) un indice hydroxyle inférieur ou égal à 100, de préférence inférieur ou égal à 50, et plus préférentiellement égal à zéro,
C) au moins 0,2% d'un catalyseur de réticulation,
les teneurs en % en poids étant exprimées relativement au poids total de la composition adhésive, et la somme des teneurs de tous les ingrédients de la compositions adhésive étant égale à 100%.

Selon un mode de réalisation, le(s) polymère(s) polysilylé(s) A.1) répond(ent) à la formule (I) ou (II), telle que définie plus bas, ou à leur mélange, et de préférence répondant à la formule (II).

Selon un mode de réalisation, le(s) polymère(s) monosilylé(s) A.2) répond(ent) à la formule (Ibis) ou (IIbis), telle que définie plus bas, ou à leur mélange, et de préférence répondant à la formule (IIbis).

Selon un mode de réalisation plus préféré, le(s) polymère(s) polysilylé(s) A.1) répond(ent) à la formule (II), et le(s) polymère(s) monosilylé(s) A.2) répond(ent) à la formule (IIbis).

Selon un mode de réalisation, le groupe connecteur est un groupe uréthane.

Selon un mode de réalisation, le(s) polymère(s) polysilylé(s) A.1) possède(nt) une masse moléculaire moyenne en nombre (Mn) allant de 6 000 à 55 000 g/mol, de préférence de 15 000 à 50 000 g/mol, plus préférentiellement de 25 000 à 45 000 g/mol.

Selon un mode de réalisation, le(s) polymère(s) monosilylé(s) A.2) possède(nt) une masse moléculaire moyenne en nombre (Mn) allant de 1 000 à 55 000 g/mol, de préférence de 2 000 à 45 000 g/mol, plus préférentiellement de 3 000 à 35 000 g/mol.

Selon un mode de réalisation, la (les) résine(s) tackifiante(s) présente(nt) (chacune) un indice hydroxyle sensiblement proche de zéro, de préférence égal à zéro.

Selon un mode de réalisation, la (les) résine(s) tackifiante(s) présente(nt) (chacune) un point de ramollissement allant de 0°C à 140°C, plus préférentiellement de 50°C à 130°C, plus préférentiellement entre 70 et 120°C.

Selon un mode de réalisation, la (les) résine(s) tackifiante(s) présente(nt) une masse moléculaire moyenne en nombre allant de 100 à 6 000 g/mol, de préférence de 300 à 4 000 g/mol.

Selon un mode de réalisation, la (les) résine(s) tackifiante(s) est (sont) choisie(s) parmi :
(i) les résines obtenues par polymérisation ou copolymérisation, éventuellement par hydrogénation, de mélanges d'hydrocarbures aliphatiques insaturés et/ou aromatiques ayant environ 5, 9 ou 10 atomes de carbone issus de coupes pétrolières ;
(ii) les résines obtenues par un procédé comprenant la polymérisation d'alpha-méthyl styrène ou la copolymérisation d'alpha-méthyl-styrène avec d'autres monomères hydrocarbonés ;
(iii) les colophanes d'origine naturelle ou modifiées, telles que par exemple la colophane extraite de la gemme de pins, la colophane de bois extraite des racines de l'arbre et leurs dérivés hydrogénés, dimérisés, polymérisés ou estérifiés par des monoalcools ou des polyalcools, comme le glycérol ou pentaérythritol; et
(iv) leurs mélanges.

Selon un mode de réalisation préféré, la composition adhésive selon l'invention comprend :
A.1) de 5 à 59,8% en poids d'un ou plusieurs polymères polysilylés tel(s) que défini(s) précédemment,
A.2) de 15 à 69,8% en poids d'un ou plusieurs polymères monosilylés tel(s) que défini(s) précédemment,
B) de 25 à 79,8% en poids d'une ou plusieurs résines tackifiantes telle(s) que définie(s) précédemment, et
C) de 0,2 à 4% en poids d'au moins un catalyseur de réticulation,
les teneurs en % en poids étant exprimées relativement au poids total de la composition adhésive, et la somme des teneurs de tous les ingrédients de la compositions adhésive étant égale à 100%.

La présente invention a pour objet en second lieu un article auto-adhésif comprenant une couche support revêtue d'une couche auto-adhésive, ladite couche auto-adhésive consistant en une composition adhésive selon l'invention à l'état réticulé.

Selon un mode de réalisation, l'article auto-adhésif est un système multicouche auto-adhésif, et en particulier une étiquette ou un ruban auto-adhésif.

La présente invention a pour objet en troisième lieu un produit revêtu au niveau de sa surface d'un article auto-adhésif selon l'invention, ladite surface présentant de préférence une énergie de surface inférieure ou égale à 40 mN/m, de préférence allant de 23 à 38 mN/m, plus préférentiellement allant de 25 à 35 mN/m, ladite énergie de surface étant mesurée à 23°C, à 50% d'humidité relative, à pression atmosphérique de 1 bar, dans l'air.

Selon un mode de réalisation, la surface du produit revêtu d'un article auto-adhésif selon l'invention est à base de plastique, de préférence de type polyoléfine, telle que polyisoprène (PI), polyisobutylène (PIB), polyéthylène (PE), polypropylène (PP) et leurs copolymères, et en particulier HDPE et PP.

La surface du produit revêtu d'un article auto-adhésif selon l'invention peut également être à base de polymère(s) d'oléfine(s) cyclique(s) tel(s) qu'obtenus par métathèse par ouverture de cycle (ROMP).

L'utilisation d'au moins un polymère monosilylé utilisé selon l'invention au sein d'une composition adhésive comprenant au moins un polymère polysilylé, au moins un résine tackifiante et au moins un catalyseur de réticulation, de préférence telle que décrite dans la présente demande, permet d'obtenir après réticulation, un adhésif présentant une force d'adhésion mesurée selon le test de pelage à 180° (effectué selon la norme Finat n°1) d'au moins 3 N/cm sur un substrat de basse énergie de surface, notamment à base de plastique, comme précisé précédemment, tel que PE et PP.

En particulier, l'utilisation d'au moins un polymère monosilylé utilisé selon l'invention au sein d'une composition adhésive comprenant au moins un polymère polysilylé, au moins une résine tackifiante et au moins un catalyseur de réticulation, de préférence telle que décrite dans la présente demande, permet d'obtenir après réticulation, un adhésif présentant une force d'adhésion mesurée selon le test de pelage à 180° (effectué selon la norme Finat n°1) d'au moins 4 N/cm sur PP.

### EXPOSE DETAILLE DES MODES DE REALISATION DE L'INVENTION

Dans la présente demande, en l'absence d'indication contraire:
- la viscosité est mesurée à 23°C à l'aide d'un viscosimètre Brookfield RTV, avec une aiguille et une vitesse de rotation adaptées à la sensibilité du capteur.
- la masse moléculaire moyenne en nombre des résines tackifiantes (exprimée en g/mol ou en dalton) peut être déterminée par des méthodes bien connues de l'homme du métier, par exemple par chromatographie d'exclusion stérique (GPC), en utilisant par exemple un étalon polystyrène.
- la masse moléculaire moyenne en nombre des polymères silylés (exprimée en g/mol ou en dalton) peut être déterminée par des méthodes bien connues de l'homme du métier, par exemple par RMN 1H/13C et/ou par calcul à partir des quantités molaires de réactifs utilisés et/ou par chromatographie d'exclusion stérique (GPC), en utilisant par exemple un étalon polystyrène.
- l'indice hydroxyle représente le nombre de fonctions hydroxyles par gramme de résine tackifiante, et est exprimé dans la présente demande sous la forme du nombre équivalent de milligrammes de potasse par gramme de résine tackifiante (mg KOH/g) pour le dosage des fonctions hydroxyles,
- l'énergie de surface d'un matériau ou substrat est mesurée à 23°C, à 50% d'humidité relative, à pression atmosphérique de 1 bar, dans l'air,
- la force d'adhésion (ou résistance au pelage) est mesurée par un test de pelage à 180° tel que décrit dans les exemples. Le test référence est la norme Finat 1, le temps de pose de l'article sur le support à tester est de 20 minutes, et le grammage de colle déposé est de 50 g/m²,
- le polymère polysilylé A.1) est un polymère tel que décrit ci-après possédant au moins deux groupements silylés hydrolysables,
- le polymère monosilylé A.2) est un polymère tel que décrit ci-après possédant un seul groupement silylé hydrolysable,
- les termes « inférieur » ou « supérieur » non suivis du terme « ou égal », signifient « strictement inférieur » et « strictement supérieur » respectivement,
- les différents modes de réalisation décrits dans la présente demande peuvent être pris seuls ou peuvent être combinés entre eux.

### COMPOSITION ADHESIVE

### Polymère polysilylé A.1)

La composition adhésive selon l'invention comprend au moins un polymère polysilylé A.1) possédant (chacun) une masse moléculaire moyenne en nombre (Mn) d'au moins 6000 g/mol, et choisis parmi les polymères comprenant une chaine principale de type polyéther et/ou polyuréthane et au moins deux groupements terminaux silylés hydrolysables, lesdits groupements terminaux silylés étant rattachés à la chaine principale du polymère par une fonction uréthane et/ou éther.

Selon un premier mode de réalisation du polymère polysilylé A.1), le polymère polysilylé A.1) est de type polyéther possédant au moins deux extrémités reliées chacune à un groupement terminal silylé hydrolysable par une fonction éther. Selon ce mode de réalisation, le polymère polysilylé A.1) peut être obtenu par un procédé de préparation comprenant :
- dans une première étape, la préparation d'un polyéther possédant au moins deux groupements terminaux allyléther (-O-CH₂-CH=CH₂), puis
- dans une deuxième étape, la réaction dudit polyéther obtenu à l'issue de la première étape avec au moins un silane possédant un groupe SiH, en quantité suffisante pour faire réagir chacun des groupements terminaux -O-CH₂-CH=CH₂ du polyéther avec le groupe SiH du silane par hydrosilylation en présence d'un catalyseur au platine, la masse moléculaire moyenne en nombre (Mn) du polyéther obtenu à l'issue de la première étape devant être suffisamment élevée pour obtenir après réaction avec le composé silane un polymère polysilylé A.1) de Mn souhaitée.

Selon un deuxième mode de réalisation du polymère polysilylé A.1), le polymère polysilylé A.1) est de type polyuréthane possédant au moins deux extrémités reliées chacune à un groupement terminal silylé hydrolysable par une fonction uréthane. Selon ce mode de réalisation, le polymère polysilylé A.1) peut être obtenu par un procédé de préparation comprenant:
- dans une première étape, la préparation d'un polyuréthane possédant au moins deux groupements terminaux OH, puis
- dans une deuxième étape, la réaction dudit polyuréthane avec au moins un isocyanatosilane possédant un groupe NCO, en quantité suffisante pour faire réagir chacun des groupements terminaux OH du polyuréthane avec le groupe NCO d'un isocyanatosilane, la masse moléculaire moyenne en nombre (Mn) du polyuréthane obtenu à l'issue de la première étape devant être suffisamment élevée pour obtenir après réaction avec le composé isocyanatosilane un polymère polysilylé A.1) de Mn souhaitée.

Le polyuréthane possédant au moins deux groupements terminaux OH peut être obtenu de manière bien connue de l'homme du métier, par polyaddition d'un excès stoechiométrique d'au moins un polyéther polyol avec au moins un diisocyanate. De préférence, le polyéther polyol est un polyéther diol.

Lors de la première étape, il est également possible d'ajouter en mélange avec le(s) polyéther polyol(s) au moins un allongeur de chaine possédant deux groupes choisis chacun indépendamment l'un de l'autre parmi OH et les amines primaires et secondaires. L'allongeur de chaine est différent du (des) polyéther(s) polyol(s) utilisé(s) pour la préparation du polyuréthane et présente généralement une masse molaire inférieure à 300 g/mole.

Les quantités de polyéther polyol(s), de diisocyanate(s), et le cas échéant d'allongeur(s) de chaine utilisées sont ajustées de manière bien connue de l'homme du métier afin d'obtenir à l'issue de la première étape un polyuréthane possédant deux groupements terminaux OH, ces quantités étant par ailleurs telles que le ratio molaire du nombre de fonctions NCO sur le nombre total de fonctions OH ajouté des fonctions amine primaire et secondaire éventuellement présentes (noté r2.1) est strictement inférieur à 1.

La quantité d'isocyanatosilane utilisée est ajustée de manière bien connue de l'homme du métier afin d'obtenir à l'issue de la deuxième étape un polymère polysilylé A.1), cette quantité étant telle que le ratio molaire du nombre de fonctions NCO sur le nombre total de fonctions OH, amine primaire ou secondaire éventuellement présentes (noté r2.2) est voisine de 1, soit entre 0,95 et 1,05.

La préparation du polymère polysilylé A.1) est réalisée de préférence en présence d'au moins un catalyseur de réaction. En particulier, on peut utiliser n'importe quel catalyseur capable d'accélérer la vitesse de la réaction et/ou des réactions sus-décrites et ayant lieu dans la première étape et/ou la deuxième étape du procédé de préparation sus-décrit.

Selon un troisième mode de réalisation du polymère polysilylé A.1), le polymère polysilylé A.1) est de type polyéther possédant au moins deux extrémités chacune reliée à un groupement terminal silylé hydrolysable par une fonction uréthane. Selon ce mode de réalisation, le polymère polysilylé A.1) peut être obtenu en faisant réagir au moins un polyéther polyol avec au moins un isocyanatosilane possédant un groupe NCO, en quantité suffisante pour faire régir chacun des groupements terminaux OH du polyéther polyol avec le groupe NCO d'un isocyanatosilane, la masse moléculaire moyenne en nombre (Mn) du polyéther polyol utilisé dans devant être suffisamment élevée pour obtenir après réaction avec l'isocyanatosilane un polymère polysilylé A.1) de Mn souhaitée.

Il est également possible d'ajouter en mélange avec le(s) polyéther polyol(s) au moins un allongeur de chaine tel que décrit précédemment.

La quantité d'isocyanatosilane utilisée est ajustée de manière bien connue de l'homme du métier afin d'obtenir un polymère polysilylé A.1), cette quantité étant telle que le ratio molaire du nombre de fonctions NCO sur le nombre total de fonctions OH, amine primaire ou secondaire éventuellement présentes (noté r3) est voisine de 1, soit entre 0,95 et 1,05.

La préparation du polymère polysilylé A.1) est réalisée de préférence en présence d'au moins un catalyseur de réaction. En particulier, on peut utiliser n'importe quel catalyseur capable d'accélérer la vitesse de la réaction ayant lieu dans le procédé de préparation sus-décrit.

De préférence, le(s) polymère(s) polysilylé(s) A.1) répond(ent) à l'une des formules suivantes, ou leur mélange :
- formule (I) : 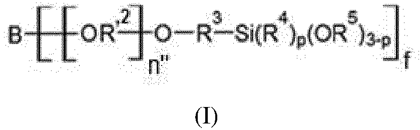 dans laquelle :
   - B représente un radical divalent (pour f=2) ou trivalent (pour f=3) hydrocarboné comprenant de 2 à 66 atomes de carbone, linéaire, ramifié, cyclique, alicyclique ou aromatique, saturé ou insaturé, comprenant éventuellement un ou plusieurs hétéroatomes, tel que O, N,
   - R³ représente un radical divalent alkylène linéaire ou ramifié comprenant de 1 à 6 atomes de carbone,
   - R'² représente un radical divalent alkylène linéaire ou ramifié comprenant de 2 à 4 atomes de carbone,
   - R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
   - n" est un nombre entier non nul tel que la masse moléculaire moyenne en nombre du bloc polyéther de formule -[OR'²]_{n"} - va de 150 g/mole à 20 000 g/mole,
   - p est un nombre entier égal à 0 ou 1,
   - f est un nombre entier égal à 2 ou 3,
   - les indices n" et f sont tels que la masse moléculaire moyenne en nombre du polymère A.1) est d'au moins 6000 g/mol ;
- formule (II) : 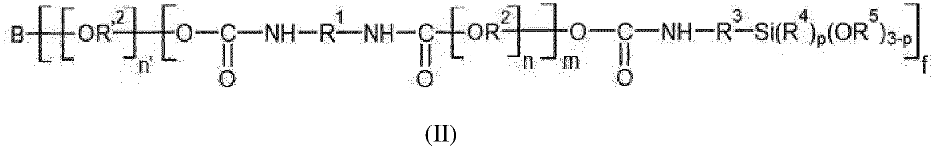 dans laquelle :
   - B représente un radical divalent (pour f=2) ou trivalent (pour f=3) hydrocarboné comprenant de 2 à 66 atomes de carbone, linéaire, ramifié, cyclique, alicyclique ou aromatique, saturé ou insaturé, comprenant éventuellement un ou plusieurs hétéroatomes, tel que O, N,
   - R¹ représente un radical divalent hydrocarboné comprenant de 5 à 15 atomes de carbone qui peut être aromatique ou aliphatique, linéaire, ramifié ou cyclique,
   - R³ représente un radical divalent alkylène linéaire ou ramifié comprenant de 1 à 6 atomes de carbone,
   - R² et R'², identiques ou différents, représentent chacun un radical divalent alkylène linéaire ou ramifié comprenant de 2 à 4 atomes de carbone,
   - R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
   - n est un nombre entier non nul tel que la masse moléculaire moyenne en nombre du bloc polyéther de formule -[OR²]ₙ- va de 300 g/mole à 40 000 g/mole,
   - n' est un nombre entier nul ou non nul tel que la masse moléculaire moyenne en nombre du bloc polyéther de formule -[OR'²]_{n'} - va de 0 à 20 000 g/mole,
   - m est un nombre entier nul ou non nul,
   - p est un nombre entier égal à 0 ou 1,
   - f est un nombre entier égal à 2 ou 3,
   - les indices m, n, n' et f sont tels que la masse moléculaire moyenne en nombre du polymère A.1) est d'au moins 6000 g/mol.

Dans les formules (I) et/ou (II), de préférence :
- R² et/ou R'² identiques ou différents, représentent chacun un radical divalent propylène linéaire ou ramifié, tel qu'un radical divalent isopropylène,
- n est un nombre entier tel que la masse moléculaire moyenne en nombre du bloc polyéther de formule -[OR²]ₙ- va de 6 000 à 25 000 g/mol, et/ou
- n' est un nombre entier tel que la masse moléculaire en nombre du bloc polyéther de formule -[OR'²]_{n'} - va de 0 à 12 500 g/mol.

Plus préférentiellement,
- R² et/ou R'² identiques représentent chacun un radical divalent isopropylène,
- n est un nombre entier tel que la masse moléculaire moyenne en nombre du bloc polyéther de formule -[OR²]ₙ- va de 8 000 à 20 000 g/mol, et
- n' est un nombre entier tel que la masse moléculaire en nombre du bloc polyéther de formule -[OR'²]_{n'}- va de 0 à 10 000 g/mol.

De préférence, R³ représente un radical divalent alkylène linéaire ou ramifié comprenant de 1 à 3 tomes de carbone, et plus préférentiellement un radical divalent méthylène ou n-propylène.

De préférence, R⁴ représente un radical méthyle, lorsque p est égal à 1.

De préférence, R⁵ représente un radical méthyle ou éthyle.

Selon un mode de réalisation, la composition adhésive comprend un mélange de polymère(s) polysilylé(s) A.1) de formule (I) et/ou (II). De préférence, la composition adhésive comprend un mélange de polymère(s) polysilylé(s) A.1) comprenant au moins un polymère polysilylé de formule (I) ou (II) tel que p = 0, et au moins un polymère polysilylé de formule (I) ou (II) tel que p = 1. Plus préférentiellement, la composition adhésive comprend un mélange de polymère(s) polysilylé(s) A.1) comprenant au moins un polymère polysilylé de formule (II) tel que p = 0, et au moins un polymère polysilylé de formule (II) tel que p = 1.

De préférence, le(s) polymère(s) silylé(s) A.1) est (sont) disilylé(s).

De préférence, le(s) polymère(s) silylé(s) A.1) répond(ent) à la formule (II).

Selon un mode de réalisation préféré, le(s) polymère(s) polysilylé(s) A.1) est un polymère(s) disilylé(s) répondant à la formule (II) dans laquelle f = 2 et m est non nul. Il a été observé que l'utilisation d'un polymère disilylé A.1) de formule (II) selon ce mode de réalisation conduisait à une amélioration des performances adhésives, notamment sur PE et PP.

Selon un mode de réalisation plus préféré encore, le(s) polymère(s) polysilylé(s) A.1) est un polymère(s) disilylé(s) répondant à la formule (II) dans laquelle f = 2, m est non nul, et p = 1. En particulier, il a été observé que l'utilisation d'un polymère disilylé A.1) de formule (II) selon ce mode de réalisation, conduisait à une amélioration des performances adhésives, notamment sur PP.

De préférence, le(s) polymère(s) polysilylé(s) A.1) possède(nt) une masse moléculaire moyenne en nombre (Mn) allant de 6 000 à 55 000 g/mol, plus préférentiellement de 15 000 à 50 000 g/mol, et plus préférentiellement encore de 20 000 à 45 000 g/mol. Les indices des formules (I) et (II) sus-cités sont de préférence tels que la masse moléculaire moyenne en nombre (Mn) du (des) polymère(s) polysilylé(s) A.1) varient dans ces fourchettes de valeurs.

En particulier, il a été observé que l'utilisation d'un polymère disilylé A.1) de Mn plus élevée dans le mélange de polymères A.1) et A.2) conduit à une amélioration des performances adhésives sur PE et PP, pour des polymères de même nature.

La teneur en polymère(s) polysilylé(s) A.1) représente au moins 4% en poids du poids de la composition adhésive selon l'invention, de préférence elle représente de 5 à 59,8% en poids, plus préférentiellement encore de 15 à 54,8% en poids, et mieux encore de 20 à 44,8% en poids, du poids total de la composition adhésive.

### Polymère monosilylé A.2)

La composition adhésive selon l'invention comprend au moins un polymère monosilylé A.2) possédant une masse moléculaire moyenne en nombre (Mn) d'au moins 1000 g/mol, et choisis parmi les polymères comprenant une chaine principale de type polyéther et/ou polyuréthane et un groupement terminal silylé hydrolysable, ledit groupement terminal silylé étant rattaché à la chaine principale du polymère par une fonction uréthane et/ou éther (dit groupe connecteur).

Selon un premier mode de réalisation du polymère monosilylé A.2), le polymère monosilylé A.2) est de type polyéther dont une des deux extrémités est reliée à un groupement terminal silylé hydrolysable par une fonction éther.

Selon ce mode de réalisation, le polymère monosilylé A.2) peut être obtenu par un procédé de préparation comprenant:
- dans une première étape, la préparation d'un alkyl(poly)éther, possédant un groupement terminal allyléther de structure (IIIa) : 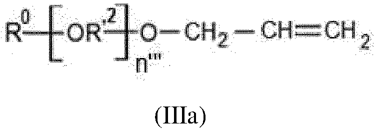 dans laquelle :
   - R⁰ représente un radical divalent hydrocarboné comprenant de 1 à 60 atomes de carbone qui peut être aliphatique, aromatique ou alkyl aromatique, linéaire, ramifié ou cyclique,
   - n'" est un nombre entier nul ou non nul tel que la masse moléculaire moyenne en nombre du bloc polyéther de formule -[OR'²]_{n'"} - va de 0 g/mole à 20 000 g/mole, et
   - R'² a la même signification que précédemment,
- dans une deuxième étape, la réaction dudit composé de formule (IIIa) avec au moins un silane possédant un groupe SiH, en quantité suffisante pour faire réagir le groupement terminal -O-CH₂-CH=CH₂ du polyéther monoallyléther avec le groupe SiH d'un silane par hydrosilylation, la masse moléculaire moyenne en nombre (Mn) du polyéther monoallyléther obtenu à l'issue de la première étape devant être suffisamment élevée pour obtenir après réaction avec le composé silane un polymère monosilylé A.2) de Mn souhaitée.

Selon un deuxième mode de réalisation du polymère monosilylé A.2), le polymère monosilylé A.2) est un polyuréthane dont une des deux extrémités est reliée à un groupement terminal silylé hydrolysable par une fonction uréthane. Selon ce mode de réalisation, le polymère monosilylé A.2) peut être obtenu de manière in-situ lors de la synthèse du polymère polysilylé A.1) par un procédé de préparation comprenant:
- dans une première étape, la préparation d'un mélange comprenant un polyuréthane possédant un seul groupement terminal OH et un polyuréthane comprenant deux groupements terminaux OH, puis
- dans une deuxième étape, la réaction dudit mélange de polyuréthanes obtenus dans la première étape avec au moins un isocyanatosilane possédant un groupe NCO, en quantité suffisante pour faire réagir la totalité des groupements terminaux OH du mélange de polyuréthanes avec le groupe NCO d'un isocyanatosilane, la masse moléculaire moyenne en nombre du polyuréthane obtenu à l'issue de la première étape devant être suffisamment élevée pour obtenir après réaction avec le composé silane les polymères polysilylé A.1) et monosilylé A.2) de Mn souhaitées.

Le mélange de polyuréthanes possédant respectivement deux groupements terminaux OH et un groupement terminal OH peut être obtenu de manière bien connue de l'homme du métier, par polyaddition d'un excès stoechiométrique d'un mélange de polyéther diol et de monol avec au moins un diisocyanate.

Le(s) polyéther diol(s) et le(s) diisocyanate(s) pouvant être utilisé(s) pour préparer le polyuréthane possédant deux groupements terminaux OH peu(ven)t être choisi(s) parmi ceux décrits dans le second mode de réalisation du polymère polysilylé A.1).

Le(s) monol(s) pouvant être utilisé(s) pour la synthèse in-situ du polyuréthane possédant un seul groupement terminal OH peu(ven)t être choisi(s) parmi les composés de structure (IIIb) ci-dessous : 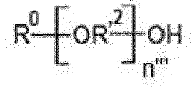 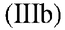 afin d'obtenir un polyuréthane possédant un seul groupement terminal OH de masse moléculaire en nombre suffisante. Dans la formule (IIIb), R⁰ et R'² sont tels que définis dans la formule (IIIa), n"' est un nombre entier nul ou non nul tel que la masse moléculaire moyenne en nombre du bloc polyéther de formule -[OR'²]_{n'"} - va de 0 g/mole à 20 000 g/mole.

L'allongeur de chaine peut être ajouté lors de la première étape en mélange avec le(s) polyéther diol(s) et le(s) monol(s).

L'allongeur de chaîne peut être choisi parmi ceux décrits dans le premier mode de réalisation.

Les quantités de polyéther diol(s), de monol(s), de diisocyanate(s), et le cas échéant d'allongeur(s) de chaine utilisées sont ajustées de manière bien connue de l'homme du métier afin d'obtenir à l'issue de la première étape un mélange comprenant un polyuréthane possédant un seul groupement terminal OH et un polyuréthane possédant deux groupements terminaux OH, ces quantités étant par ailleurs telles que le ratio molaire du nombre de fonctions NCO sur le nombre total de fonctions OH ajouté des fonctions amine primaire et secondaire éventuellement présentes (noté r2.1) est strictement inférieur à 1.

La quantité d'isocyanatosilane utilisée est ajustée de manière bien connue de l'homme du métier afin d'obtenir à l'issue de la deuxième étape un mélange de polymère polysilylé A.1) et de polymère monosilylé A.2), cette quantité étant telle que le ratio molaire du nombre de fonctions NCO sur le nombre total de fonctions OH, amine primaire ou secondaire éventuellement présentes (noté r2.2) est voisine de 1, soit entre 0,95 et 1,05.

La préparation du mélange de polymère polysilylé A.1) et de polymère monosilylé A.2) est réalisée de préférence en présence d'au moins un catalyseur de réaction. En particulier, on peut utiliser n'importe quel catalyseur capable d'accélérer la vitesse de la réaction et/ou des réactions sus-décrites et ayant lieu dans la première étape et/ou la deuxième étape du procédé de préparation sus-décrit.

Selon un troisième mode de réalisation du polymère monosilylé A.2), le polymère monosilylé A.2) est un polyéther dont une des deux extrémités est reliée à un groupement terminal silylé hydrolysable par une fonction uréthane. Selon ce mode de réalisation, le polymère monosilylé A.2) peut être obtenu en faisant réagir au moins un composé de structure (IIIb), tel que défini ci-dessous : 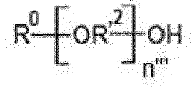 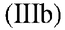 avec au moins un isocyanatosilane possédant un groupe NCO, en quantité suffisante pour faire régir chaque groupe OH du composé (IIIb) avec le groupe NCO d'un isocyanatosilane, la masse moléculaire moyenne en nombre du polyéther monol utilisé étant choisie de manière à obtenir un polymère monosilylé A.2) de Mn souhaitée. Dans la formule (IIIb), R⁰ et R'² sont tels que définis dans la formule (IIIa), n'" est un nombre entier nul ou non nul tel que la masse moléculaire moyenne en nombre du bloc polyéther de formule - [OR'²]_{n'"} - va de 0 g/mole à 20 000 g/mole.

La quantité d'isocyanatosilane utilisée est ajustée de manière bien connue de l'homme du métier afin d'obtenir un polymère monosilylé A.2), cette quantité étant telle que le ratio molaire du nombre de fonctions NCO sur le nombre total de fonctions OH, amine primaire ou secondaire éventuellement présentes (noté r2.2) est voisine de 1, soit entre 0,95 et 1,05.

La préparation du mélange de polymère polysilylé A.1) et de polymère monosilylé A.2) est réalisée de préférence en présence d'au moins un catalyseur de réaction. En particulier, on peut utiliser n'importe quel catalyseur capable d'accélérer la vitesse de la réaction et/ou des réactions sus-décrites et ayant lieu dans la première étape et/ou la deuxième étape du procédé de préparation sus-décrit.

De préférence, le(s) polymère(s) monosilylé(s) A.2) répond(ent) à l'une des formules suivantes, ou à leur mélange :
- formule (Ibis) : 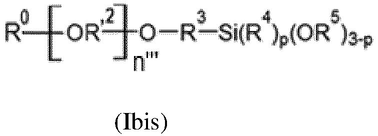 dans laquelle :
   - R⁰ représente un radical divalent hydrocarboné comprenant de 1 à 60 atomes de carbone qui peut être aliphatique, aromatique ou alkyl aromatique, linéaire, ramifié ou cyclique,
   - R³ représente un radical divalent alkylène linéaire ou ramifié comprenant de 1 à 6 atomes de carbone,
   - R'² représente un radical divalent alkylène linéaire ou ramifié comprenant de 2 à 4 atomes de carbone,
   - R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
   - n"' est un nombre entier nul ou non nul tel que la masse moléculaire moyenne en nombre du bloc polyéther de formule -[OR'²]_{n'"} - va de 0 g/mole à 20 000 g/mole,
   - p est un nombre entier égal à 0, 1 ou 2.
   - R⁰ et n'" sont tels que la masse moléculaire moyenne en nombre du polymère A.2) est d'au moins 1000 g/mol ;
- formule (IIbis) : 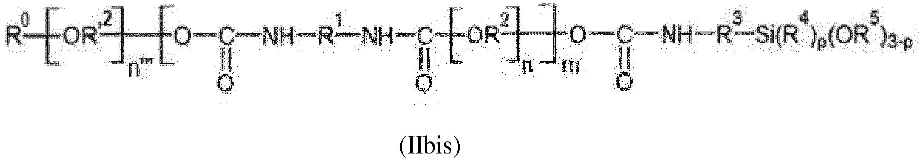 dans laquelle :
   - R⁰ représente un radical divalent hydrocarboné comprenant de 1 à 60 atomes de carbone qui peut être aliphatique, aromatique ou alkyl aromatique, linéaire, ramifié ou cyclique,
   - R¹ représente un radical divalent hydrocarboné comprenant de 5 à 15 atomes de carbone qui peut être aromatique ou aliphatique, linéaire, ramifié ou cyclique,
   - R³ représente un radical divalent alkylène linéaire ou ramifié comprenant de 1 à 6 atomes de carbone,
   - R² et R'², identiques ou différents, représentent chacun un radical divalent alkylène linéaire ou ramifié comprenant de 2 à 4 atomes de carbone,
   - R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
   - n est un nombre entier tel que la masse moléculaire moyenne en nombre du bloc polyéther de formule -[OR²]ₙ- va de 300 g/mole à 40 000 g/mole,
   - n"' est un nombre entier nul ou non nul tel que la masse moléculaire moyenne en nombre du bloc polyéther de formule -[OR'²]_{n'"} - va de 0 à 20 000 g/mole,
   - m est un nombre entier nul ou non nul,
   - p est un nombre entier égal à 0, 1 ou 2.
   - R⁰ et les indices m, n et n'" sont tels que la masse moléculaire moyenne en nombre du polymère A.2) est d'au moins 1000 g/mol.

De préférence, p est un nombre entier égal à 0 ou 1. Plus préférentiellement, p est égal à 1.

De préférence, le(s) polymère(s) monosilylé(s) A.2) répond(ent) à la formule (IIbis).

De préférence, le(s) polymère(s) monosilylé(s) A.2) répond(ent) à la formule (IIbis) dans laquelle p = 1.

De préférence, le(s) polymère(s) monosilylé(s) A.2) possède(nt) une masse moléculaire moyenne en nombre (Mn) allant de 1 000 à 55 000 g/mol, de préférence de 2 000 à 45 000 g/mol, plus préférentiellement de 3 000 à 35 000 g/mol. R⁰ et les indices des formules (Ibis) et (IIbis) sus-cités sont de préférence tels que la masse moléculaire moyenne en nombre (Mn) du (des) polymère(s) monosilylé(s) A.2) varient dans ces fourchettes de valeurs.

La teneur en polymère(s) monosilylé(s) A.2) représente au moins 13% du poids total de la composition adhésive selon l'invention, de préférence elle représente de 15 à 69,8% en poids, plus préférentiellement de 15 à 54,8% en poids, et mieux encore de 20 à 44,8% en poids par rapport au poids total de la composition adhésive.

En particulier, il a été observé que l'utilisation d'une teneur plus importante de polymère monosilylé A.2) dans le mélange de polymères A.1) et A.2) conduit à une amélioration des performances adhésives sur PE et PP.

Dans les variantes de mélange polymères polysilylé A.1) et monosilylé A.2) tels que décrits ci-dessus, on préfère le mélange de polymères de formule (II) et (IIbis).

Les compositions adhésives selon ces variantes conduisent à de meilleures performances d'adhésion sur les substrats de type polyoléfines telles que PE et PP, en particulier HDPE et PP, et plus particulièrement sur PP.

La force d'adhésion mesurée par le test de pelage à 180° (fait selon la norme Finat 1) des compositions adhésives selon ces variantes est supérieure ou égale à 3 N/cm, plus préférentiellement supérieure ou égale à 3,5 N/cm et mieux encore supérieure ou égale à 4 N/cm, sur PE et en particulier HDPE.

La force d'adhésion mesurée par le test de pelage à 180° (fait selon la norme Finat 1) des compositions adhésives selon ces variantes est supérieure ou égale à 4 N/cm, plus préférentiellement à 5 N/cm, ou plus préférentiellement supérieur à 6 N/cm, plus préférentiellement encore supérieure ou égale à 7 N/cm, sur PP.

Les procédés de préparation des polymères polysilylé A.1) et monosilylé A.2) sus-décrits sont conduits dans des conditions anhydres, de manière à éviter l'hydrolyse des groupes silylés hydrolysables. De même, l'utilisation de ces polymères est de préférence réalisée dans de telles conditions.

### Résine tackifiante B)

La ou les résines tackifiantes B) utilisables dans la composition adhésive selon l'invention sont compatibles avec les polymères polysilylé A.1) et monosilylé A.2)

Par "résine tackifiante compatible", on entend une résine tackifiante qui, lorsqu'elle est mélangée dans les proportions 50%/50% en poids avec le mélange de polymères polysilylé A.1) et monosilylé A.2), donne un mélange substantiellement homogène.

De préférence, la (les) résine(s) tackifiante(s) B) présente(nt) (chacune) un indice hydroxyle inférieur ou égal à 50, plus préférentiellement sensiblement proche de zéro, et mieux encore égal à zéro.

La (les) résine(s) tackifiante(s) B) présente(nt) de préférence (chacune) un point de ramollissement allant de 0°C à 140°C, plus préférentiellement de 50°C à 130°C, plus préférentiellement entre 70 et 120°C.

La (les) résine(s) tackifiante(s) B) présente(nt) de préférence une masse moléculaire moyenne en nombre allant de 100 à 6 000 g/mol, de préférence de 300 à 4 000 g/mol.

De préférence, la (les) résine(s) tackifiante(s) est (sont) choisie(s) parmi :
(i) les résines obtenues par polymérisation ou copolymérisation, éventuellement par hydrogénation, de mélanges d'hydrocarbures aliphatiques insaturés et/ou aromatiques ayant environ 5, 9 ou 10 atomes de carbone issus de coupes pétrolières ;
(ii) les résines obtenues par un procédé comprenant la polymérisation d'alpha-méthyl styrène ou la copolymérisation d'alpha-méthyl-styrène avec d'autres monomères hydrocarbonés ;
(iii) les colophanes d'origine naturelle ou modifiées, telles que par exemple la colophane extraite de la gemme de pins, la colophane de bois extraite des racines de l'arbre et leurs dérivés hydrogénés, dimérisés, polymérisés ou estérifiés par des monoalcools ou des polyalcools, comme le glycérol ou pentaérythritol; et
(iv) leurs mélanges.

Selon un mode de réalisation préféré, la résine tackifiante B) est une résine tackifiante de type (i) ou un mélange de résines tackifiantes comprenant au moins une résine tackifiante de type (i) et/ou (ii). Plus préférentiellement encore, la résine tackifiante B) est un mélange de résines tackifiantes comprenant au moins une résine tackifiante de type (i) et (ii). En particulier, il a été observé que l'utilisation d'un mélange de résines tackifiantes comprenant au moins une résine de type (i), et de préférence un mélange comprenant au moins une résine de type (i) et (ii), selon ce mode de réalisation, conduisait à une amélioration des performances adhésives, en particulier, au moins sur PP.

De telles résines sont disponibles commercialement. On peut citer par exemple les produits suivants :
- résines de type (i) : PICCO^{®} AR-100 (disponible auprès de la société EASTMAN) qui est obtenue par polymérisation de mélanges d'hydrocarbures aromatiques ayant principalement 9 atomes de carbone issus de coupes pétrolières, ayant un IOH nul, une masse moléculaire en nombre de 600 g/mol et possédant un point de ramollissement de 100°C ou encore la résine PICCO^{®} AR-85 (disponible auprès de la société EASTMAN) qui est obtenue par polymérisation de mélanges d'hydrocarbures aromatiques ayant principalement 9 atomes de carbone issus de coupes pétrolières, ayant un IOH nul, une masse moléculaire en nombre de 520 g/mol et un point de ramollissement de 85°C ou encore la résine NORSOLENE^{®} M1090 (disponible auprès de la société CRAY VALLEY) qui est une résine aliphatique modifiée aromatique ayant un IOH nul et un point de ramollissement de 90°C ou encore la résine PICCO^{®} A-10 (disponible auprès de la société EASTMAN) de masse moléculaire en nombre de 420 g/mol et liquide à température ambiante;
- résines de type (ii) : NORSOLENE^{®} W110 (disponible auprès de la société CRAY VALLEY), qui est obtenue par polymérisation d'alpha-méthyl styrène sans action de phénols, ayant un IOH nul, avec une masse moléculaire en nombre de 750 g/mol et possédant un point de ramollissement de 110°C ; NORSOLENE^{®} W85 (disponible auprès de la société CRAY VALLEY) correspondant à une résine d'alpha méthyle styrène, ayant un IOH nul, une masse moléculaire moyenne en nombre de 600 g/mol environ et un point de ramollissement de 85°C ;
- résines de type (iii) : SYLVALITE^{®} RE 100 (disponible auprès de la société ARIZONA CHEMICAL) qui est un ester de colophane et de pentaérythritol, ayant un IOH de 50 mg KOH/g, avec une masse moléculaire en nombre de 974 g/mol, et possédant un point de ramollissement de 100°C.

La teneur en résine(s) tackifiante(s) B) représente au moins 25% en poids du poids total de la composition adhésive selon l'invention, de préférence elle représente de 25 à 79,8% en poids, plus préférentiellement encore de 30 à 69,8% en poids, et mieux encore de 35 à 59,8% en poids, du poids total de la composition adhésive.

### Catalyseur de réticulation C)

Le(s) catalyseur(s) de réticulation (C) utilisable(s) dans la composition selon l'invention peu(ven)t être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR^{®} AA75 auprès de la société DuPont), de l'aluminium comme le chélate d'aluminium (disponible commercialement sous la dénomination K-KAT^{®} 5218 auprès de la société KING INDUSTRIES), des amines comme le 1,8-diazobicyclo (5.4.0) undécène-7 ou DBU.

La teneur en catalyseur(s) de réticulation C) va de 0,2 à 4% en poids du poids total de la composition adhésive.

Selon un mode de réalisation préféré, la composition adhésive selon l'invention comprend :
- au moins 5 % en poids d'un ou plusieurs polymères polysilylés A.1),
- au moins 15 % en poids d'un ou plusieurs polymères monosilylés A.2),
- de 25 à 79,8% en poids d'une ou plusieurs résines tackifiantes B), et
- de 0,2 à 4% en poids d'au moins un catalyseur de réticulation C),
la teneur en polymères silylés A.1) et A.2) représentant de 20 à 74,8% en poids du poids total de la composition adhésive.

Selon un mode de réalisation encore plus préféré, la composition adhésive selon l'invention comprend :
- au moins 15 % en poids d'un ou plusieurs polymères disilylés A.1),
- au moins 15 % en poids d'un ou plusieurs polymères monosilylés A.2),
- de 30 à 69,8% en poids d'une ou plusieurs résines tackifiantes B), et
- de 0,2 à 4% en poids d'au moins un catalyseur de réticulation C),
la teneur en polymères silylés A.1) et A.2) représentant de 30 à 69,8% en poids du poids total de la composition adhésive.

Selon un mode de réalisation encore plus préféré encore, la composition adhésive selon l'invention comprend :
- au moins 20 % en poids d'un ou plusieurs polymères disilylés A.1),
- au moins 20 % en poids d'un ou plusieurs polymères monosilylés A.2),
- de 35 à 59,8% en poids d'une ou plusieurs résine tackifiante B), et
- de 0,2 à 4% en poids d'au moins un catalyseur de réticulation C),
la teneur en polymères silylés A.1) et A.2) représentant de 40 à 64,8% en poids du poids total de la composition adhésive.

La composition adhésive selon l'invention peut également inclure ou non, en combinaison avec le mélange de polymères polysilylé A.1) et monosilylé A.2), au moins un polymère thermoplastique choisi parmi ceux utilisés dans la préparation des HMPSA, tels que l'Ethylène Vinyl Acétate (EVA) ou des copolymères blocs styréniques (tels que SIS, SBS, SIBS, SEBS, SEPS, et leurs dérivés greffés avec notamment de l'anhydride maléique). Ces polymères thermoplastiques ne sont pas silylés.

La composition adhésive selon l'invention peut en outre comprendre ou non au moins un dérivé alkoxysilane hydrolysable, non polymérique, de masse molaire inférieure à 500 g/mol, en tant qu'agent desséchant, et de préférence un dérivé de triméthoxysilane. Un tel agent prolonge avantageusement la durée de conservation de la composition adhésive selon l'invention durant le stockage et le transport, avant son utilisation. On peut citer par exemple le gamma-métacryloxypropyltriméthoxysilane disponible sous la dénomination commerciale SILQUEST^{®} A-174 auprès de la société MOMENTIVE. La teneur en agent(s) desséchant(s) pouvant aller jusqu'à 3 % en poids du poids de la composition adhésive.

La composition selon l'invention peut aussi inclure ou non au moins un plastifiant tel qu'un phtalate ou un benzoate, une huile paraffinique et naphténique (comme le Primol^{®} 352 de la société ESSO) ou encore une cire d'un homopolymère de polyéthylène (comme l'A-C^{®} 617 de HONEYWELL), ou une cire d'un copolymère de polyéthylène et d'acétate de vinyle, ou encore des pigments ou des colorants, ou un mélange de ces composés.

La composition adhésive selon l'invention peut comprendre ou non des charges. La teneur en charges représente de préférence moins de 15% en poids, plus préférentiellement moins de 10% en poids, et plus préférentiellement encore moins de 1% en poids, du poids de la composition adhésive.

Enfin, une quantité de 0,1 à 2 % d'un ou plusieurs stabilisants (ou anti-oxydants) est de préférence incluse dans la composition adhésive selon l'invention. Ces composés sont introduits pour protéger la composition d'une dégradation résultant d'une réaction avec de l'oxygène qui est susceptible de se former par action de la chaleur ou de la lumière. Ces composés peuvent inclure des anti-oxydants primaires qui piègent les radicaux libres et sont notamment des phénols substitués comme l'Irganox^{®} 1076 de CIBA. Les anti-oxydants primaires peuvent être utilisés seuls ou en combinaison avec d'autres anti-oxydants secondaires ou des stabilisants UV.

La composition adhésive selon l'invention peut être préparée par un procédé qui comprend :
- une étape de mélange à l'abri de l'air, de préférence sous atmosphère inerte ou vide, des polymères polysilylé A.1) et monosilylé A.2), avec la ou les résines tackifiantes B), à une température allant de 40 à 170°C, de préférence allant de 70 à 150°C, puis
- une étape d'incorporation dans ledit mélange d'au moins un catalyseur de réticulation C) à une température allant de 40 à 90°C et, le cas échéant, d'au moins un agent desséchant et d'un ou plusieurs autres composants optionnels tels que décrits précédemment.

La composition adhésive selon l'invention peut être utilisée pour la fabrication d'un article auto-adhésif, comprenant une couche support temporaire ou permanente et une couche adhésive, ladite couche adhésive étant obtenue par réticulation de la composition adhésive.

La couche support de l'article auto-adhésif obtenu à partir de la composition adhésive selon l'invention peut être une couche support temporaire ou permanente.

Dans le cas où la couche support est un support temporaire, la couche support est de préférence un film plastique ou papier protecteur anti-adhérent (« release liner » en anglais). Dans ce cas, une fois que l'article est collé sur une surface, l'article collé comprend uniquement une couche adhésive, le support temporaire étant destiné à être retiré.

Par « anti-adhérent » on entend un matériau sur lequel la composition adhésive selon l'invention à l'état réticulée présente une force d'adhésion inférieure à 200 centinewton par centimètre (cN/cm), et de préférence inférieure à 50 cN/cm ou encore plus préférentiellement inférieure à 30 cN/cm ou encore plus préférentiellement inférieure à 10 cN/cm. Cette valeur est mesurée selon le test FINAT 3 réalisé à une vitesse de traction de 300 mm/mn et un angle de traction de 180°.

La couche anti-adhérente présente généralement une énergie de surface inférieure ou égale à 22 mN/m, plus préférentiellement inférieure à 20 mN/m.

Dans le cas où la couche support est une couche support permanente, la couche support peut être à base de tous matériaux utilisables pour la fabrication d'articles sensibles à la pression ou article PSA.

### ARTICLE AUTO-ADHESIF

La présente invention a également pour objet un article auto-adhésif comprenant une couche support revêtue d'une couche auto-adhésive, ladite couche auto-adhésive consistant en une composition adhésive selon l'invention à l'état réticulé.

Au sens de la présente invention, le terme « article auto-adhésif » inclut tout article qui peut être collé sur une surface seulement par l'action d'une pression avec la main ou un équipement, sans l'utilisation de colles ou adhésifs supplémentaires. L'expression « article auto-adhésif » comprend également l'expression « article adhésif sensible à la pression » ou « article PSA » (« Pressure Sensitive Adhesive article » en anglais). Ces articles ont pour but d'être appliqués sur une surface à coller afin de rapprocher, de maintenir, de fixer, ou simplement d'immobiliser, d'exposer des formes, logos, images ou informations. Ces articles peuvent être utilisés dans de nombreux domaines, tels que le domaine médical, l'habillement, l'emballage, l'automobile ou la construction. Ils peuvent être façonnés en fonction de leur application finale, par exemple sous la forme de rubans, tels que les rubans à usage industriel, les rubans de bricolage ou à usage de fixation sur chantiers, les rubans simple ou double face, ou sous la forme d'étiquettes, de bandages, de pansements, de patchs ou de films graphiques.

Selon un mode de réalisation, l'article auto-adhésif est un système multicouche auto-adhésif, et en particulier une étiquette ou un ruban auto-adhésif, pouvant être à simple ou double face.

La couche support est suffisamment flexible pour pouvoir être enroulée et conditionnée sous la forme d'une bobine, par exemple telle que décrite précédemment.

De préférence, la couche support présente une élongation à la rupture supérieure à zéro et strictement inférieure à 100%. Plus préférentiellement, la couche support présente une élongation à la rupture inférieure ou égale à 50%, et encore plus préférentiellement inférieure ou égale à 40%. Mieux encore, la couche support présente une élongation à la rupture inférieure ou égale à 30%.

L'élongation à la rupture peut être mesurée selon la norme ISO 1926 à 23°C, dans le sens de la longueur ou de la largeur. De préférence, l'élongation à la rupture est mesurée dans le sens de la longueur.

La couche support peut être par exemple à base de polymères acryliques, de Polyéthylène (PE), Polypropylène (PP) orienté, non orienté ou bi-orienté, Polyimide, Polyuréthane, Polyester tel que le Polyéthylène téréphtalate (PET), ou de papier.

De préférence, la couche support présente un module d'Young strictement supérieur à 300 MPa, plus préférentiellement supérieur ou égal à 400 MPa, et mieux encore supérieur ou égale à 500 MPa.

Selon un mode de réalisation, l'article auto-adhésif obtenu à partir de la composition adhésive selon l'invention comprend une couche support permanente revêtue d'une couche adhésive. De préférence, la couche adhésive est en outre revêtue d'un film plastique ou papier protecteur anti-adhérent, de préférence siliconé.

A titre d'alternative au film protecteur anti-adhérent, la face arrière de la couche support permanente qui n'est pas revêtue de la couche adhésive, peut avoir une surface anti-adhérente, par exemple une couche protectrice siliconée.

Les deux modes de réalisation décrits ci-dessus permettent d'enrouler l'article auto-adhésif puis de le dérouler sans problème de transfert de colle entre la couche adhésive et la couche support permanente.

Selon un mode de réalisation, la couche support permanente est revêtue sur ses deux faces par une composition adhésive, qui peut être identique ou différente, au moins une des deux compositions adhésives étant selon l'invention.

De préférence, la couche support présente une épaisseur allant de 10 microns à 50 mm, de préférence encore allant de 10 microns à 20 mm, de préférence allant de 20 microns à 10 mm, de préférence encore allant de 20 microns à 1 mm.

Dans certains cas, il est nécessaire de procéder à un traitement de surface de la couche support pour augmenter l'accroche de la couche adhésive lors de l'étape d'enduction sur celle-ci, notamment lorsque la couche support et la surface du substrat à coller présentent la même énergie de surface.

L'article auto-adhésif selon l'invention peut être appliqué sur la surface d'un substrat de basse énergie de surface n'ayant pas subie de prétraitements de surface. Ces prétraitements visent à modifier chimiquement et/ou physiquement ladite surface, pour accroitre l'énergie superficielle et/ou la rugosité de ladite surface, et ainsi améliorer l'adhérence de la couche adhésive sur ladite surface. A titre d'exemple de traitements de surface connus, on peut citer un traitement plasma ou corona, une abrasion ou encore l'application sur ladite surface d'un agent chimique d'accroche (dit aussi primaire) capable de conférer au substrat revêtu dudit agent une énergie de surface plus élevée.

L'article auto-adhésif selon l'invention peut ainsi coller deux substrats, dont au moins l'une d'elles est présente une basse énergie de surface.

Le substrat sur lequel l'article auto-adhésif est destiné à être appliqué (désigné par « substrat à coller ») peut être flexible ou rigide.

En particulier, il peut présenter les mêmes propriétés de flexibilité que la couche support décrite ci-dessus, de manière à être enroulé et conditionné sous la forme d'une bobine, par exemple telle que décrite précédemment.

Alternativement, le substrat à coller peut être rigide. Dans ce cas, le substrat ne peut être enroulé et conditionné sous la forme d'une bobine, par exemple telle que décrite précédemment, sans se fragiliser.

Le substrat à coller peut être choisie parmi des substrats de basse énergie de surface, tels que des substrats de type polyoléfines, qui sont des substrats apolaires organiques ; ou encore des revêtements apolaires organiques de type vernis, encres ou peintures; lesdits substrats possédant une énergie de surface inférieure ou égale à 40 mN/m, de préférence allant de 23 à 38 mN/m, plus préférentiellement allant de 25 à 35 mN/m.

Les substrats de type polyoléfine peuvent être par exemple des matériaux polymériques à base de monomères et co-monomères tels que le polyéthylène (PE), le polypropylène (PP), le polyisoprène (PI), le polyisobutylène (PIB), et leurs copolymères (blocks ou statistiques), ou encore à base de polymère(s) d'oléfine(s) cyclique(s) tel(s) qu'obtenus par métathèse par ouverture de cycle (ROMP), ou encore les mélanges de ces polymères.

A titre d'exemple de polyéthylène (PE), on peut citer en particulier le polyéthylène haute densité (HDPE), le polyéthylène faible densité (LDPE), le polyéthylène faible densité linéaire et le polyéthylène ultra faible densité linéaire.

Grâce aux propriétés adhésives de l'adhésif obtenu par réticulation de la composition adhésive selon l'invention, l'article auto-adhésif selon l'invention peut coller sur un substrat de basse énergie de surface, notamment à base de plastique, de préférence à base de polyoléfine, telle que PE et PP, et en particulier HDPE et PP, avec une force d'adhésion d'au moins 3N/cm.

En particulier, l'article auto-adhésif selon l'invention peut coller sur un substrat à base de PP, avec une force d'adhésion d'au moins 4N/cm.

Selon un mode de réalisation de l'invention, l'article auto-adhésif comprend en outre une couche anti-adhérente protectrice (« release liner » en anglais).

Selon un mode de réalisation, ladite couche anti-adhérente est appliquée sur la couche adhésive, après réticulation de la composition adhésive.

La couche support peut être recouverte sur une de ses deux faces, la face arrière qui n'est pas revêtue de la couche adhésive, par une couche protectrice anti-adhérente, par exemple par un film siliconé. De cette façon, l'article auto-adhésif peut être enroulé sur lui-même puis déroulé sans problème grâce à l'absence d'adhésion de la couche adhésive sur la face siliconée.

L'article auto-adhésif selon l'invention est susceptible d'être obtenu par le procédé comprenant les étapes suivantes :
(a) le conditionnement de la composition adhésive selon l'invention telle que définie précédemment à une température allant de 20 à 130°C ; puis
(b) l'enduction par la composition adhésive obtenue à l'étape (a) d'une surface porteuse ; puis
(c) la réticulation de la composition adhésive enduite, par chauffage à une température allant de 20 à 200°C dans un environnement gazeux où des molécules d'eau sont présentes entre 10 et 200 mg par m³ de gaz;
(d) le contre collage ou le transfert de la couche adhésive réticulée sur une couche support ou sur un film protecteur anti-adhérent, ladite couche support ou film anti-adhérent pouvant être le revers de la surface porteuse.

Par « surface porteuse » au sens de la présente invention, il faut comprendre soit un convoyeur à bande recouvert d'une couche anti-adhérente, soit un film protecteur anti-adhérent (« release liner » en anglais), soit une couche support. Ainsi, la surface porteuse est amenée à devenir partie intégrante de l'article auto-adhésif, soit comme film protecteur anti-adhérent, soit comme couche support.

Dans le cas où la surface porteuse n'est pas une couche support, le procédé d'obtention de l'article auto-adhésif selon l'invention comprend l'étape (d) de transfert de la couche adhésive réticulée sur une couche support.

Dans le cas où la surface porteuse est une couche support, le procédé d'obtention de l'article auto-adhésif selon l'invention peut comprendre l'étape (d) de contre collage de la couche adhésive sur un film protecteur anti-adhérent.

Selon une variante préférée de l'invention, l'étape (d) du procédé sus-décrit consiste en un transfert de la couche adhésive réticulée sur une couche support souple (pouvant être un film plastique) après refroidissement de la couche adhésive réticulée à une température inférieure à la température de dégradation ou de ramollissement du matériau composant la couche support. Selon cette variante, il est possible de fabriquer un article auto-adhésif comprenant une couche support faite en un matériau sensible à la température, par exemple un matériau à base de polyoléfine, tels que cités plus haut.

Selon un mode de réalisation, l'article auto-adhésif selon l'invention est susceptible d'être obtenu par le procédé tel que décrit précédemment, ne comprenant pas d'étape de prétraitement de la surface de la couche support. Ces prétraitements visent à modifier chimiquement et/ou physiquement ladite surface, pour accroitre l'énergie superficielle et/ou la rugosité de ladite surface, et ainsi améliorer l'adhérence de la couche adhésive sur ladite surface. A titre d'exemple, de traitements de surface connus, on peut citer un traitement plasma, corona, une abrasion ou encore l'application sur ladite surface d'un agent chimique d'accroche (dit aussi primaire) capable de conférer au substrat revêtu dudit agent une énergie de surface élevée.

Selon un mode de réalisation de l'invention, la couche adhésive telle que décrite ci-dessus, présente une force d'adhésion sur des substrats de différentes énergies de surface d'au moins 3 N/cm, de préférence au moins 3,5 N/cm, de préférence encore d'au moins 4 N/cm.

En particulier, un article auto-adhésif constitué d'une couche support de PolyEthylèneTéréphtalate (PET) d'épaisseur 50 µm, revêtue d'une couche adhésive selon l'invention, à raison d'un grammage de 50 g/m², présente une adhésion permanente sur HDPE ou PP correspondant à un pouvoir adhésif (mesuré par le test de pelage à 180° (effectué selon la norme Finat 1) allant avantageusement de 3 à 15 N/cm.

Ladite force d'adhésion peut être mesurée après un temps de pose de l'article auto-adhésif sur une surface d'un substrat de basse énergie de surface défini pouvant aller à quelques minutes, à quelques heures, ou plusieurs jours, tel qu'illustré notamment dans les exemples.

Selon un mode de réalisation, le procédé de fabrication de l'article auto-adhésif selon l'invention comprend en outre une étape (e) d'enduction d'une seconde couche de composition adhésive selon l'invention sur la couche support suivie d'une étape (f) de réticulation de la composition adhésive enduite à l'étape (e) par chauffage à une température allant de 20 à 200°C. Selon ce mode de réalisation, un article auto-adhésif double face est obtenu.

L'étape (b) d'enduction peut être réalisée au moyen de dispositifs d'enduction connus, comme par exemple une buse à lèvre ou de type rideau, ou encore au rouleau. Elle met en oeuvre un grammage de composition adhésive allant de 3 à 2000 g/m², de préférence de 5 à 1000 g/m², de préférence encore de 10 à 500 g/m² ou plus préférentiellement de 12 à 250g/m².

Le grammage de composition adhésive nécessaire pour la fabrication d'étiquettes auto-adhésives peut aller de 10 à 100 g/m², de préférence de 20 à 50 g/m². Celui nécessaire pour la fabrication de rubans auto-adhésifs peut varier dans un domaine beaucoup plus large allant de 3 à 500 g/m², de préférence de 15 à 250 g/m² par face.

Selon un mode de réalisation, la composition adhésive enduite est en outre soumise, lors de l'étape (c) à un traitement dans une atmosphère humide caractérisée par son niveau d'humidité. De préférence, l'atmosphère humide est une atmosphère dans laquelle de 2 à 100% des molécules sont des molécules d'eau, de préférence de 4 à 50%, de préférence encore de 5 à 10% des molécules sont des molécules d'eau.

Le taux d'humidité est exprimé en pourcentage d'eau par unité de volume, ce qui correspond au nombre de molécules d'eau divisé par le nombre total de molécules dans une unité de volume. Grâce à la nature linéaire de cette échelle, le taux d'humidité est facilement mesuré et contrôlé en utilisant par exemple des moniteurs de type P.I.D (« Proportional-Integral-Derivative »). Le pourcentage en poids peut être calculé en multipliant le pourcentage du nombre de molécules d'eau par rapport au nombre total de molécules par un facteur de 0,622. Des informations générales sur le taux d'humidité dans divers environnements sont décrites par W. Wagner et al., dans "International Steam Tables - Properties of Water and Steam based on the Industrial Formulation IAPWS-IF97*".*

Le temps nécessaire à la réticulation de l'étape (c) peut varier dans de larges limites, par exemple entre 1 seconde et 30 minutes, en fonction du grammage de composition adhésive déposé sur la surface porteuse, de la température de chauffage, et de l'humidité.

Cette étape de réticulation thermique a pour effet la création - entre les chaînes polymériques du mélange de polymères polysilylé A.1) et monosilylé A.2) tels que décrits ci-dessus et sous l'action de l'humidité - de liaisons de type siloxane qui conduisent à la formation d'un réseau polymérique tridimensionnel. La composition adhésive ainsi réticulée est un adhésif sensible à la pression qui confère à la couche support qui en est revêtue le pouvoir adhésif et le tack désirés.

De préférence, l'enduction est réalisée uniformément sur la couche support ou sur la couche protectrice anti-adhérente mais l'enduction peut également être adaptée à la forme souhaitée de l'article auto-adhésif final.

Selon un mode de réalisation, l'enduction par la composition adhésive est réalisée sur au moins une partie des deux faces de la couche support. Si les deux faces de la couche support sont enduites, la composition adhésive peut être identique ou différente sur les deux faces, et le grammage peut être identique ou différent sur les deux faces.

Selon un mode de réalisation de l'invention, l'article auto-adhésif comprend une couche adhésive sur au moins une partie d'une face ou sur au moins une partie des deux faces de la couche support, ladite ou lesdites couches adhésives étant éventuellement revêtues d'une couche protectrice anti-adhérente. Selon un mode de réalisation, l'article auto-adhésif comprend deux couches protectrices anti-adhérentes sur chacune des deux couches adhésives. Dans ce cas, les deux couches protectrices peuvent être en matériaux identiques ou différents et/ou elles peuvent avoir une épaisseur identique ou différente.

L'article auto-adhésif selon l'invention peut être utilisé dans une méthode de collage comprenant les étapes suivantes :
a) retirer la couche protectrice anti-adhérente, lorsqu'une telle couche est présente ;
b) appliquer l'article auto-adhésif sur une surface d'un produit; et
c) appliquer une pression sur ledit article.

A l'étape b), l'article auto-adhésif est appliqué de manière à ce que la partie auto-adhésive de l'article (formée par la couche auto-adhésive) fasse face à la surface du produit.

Selon un mode de réalisation dans lequel l'article auto-adhésif est un article double face, la méthode de collage comprend en outre une étape dans laquelle soit une seconde surface d'un produit est appliquée sur l'article collé sur la première surface d'un produit, soit l'article collé sur la première surface d'un produit est appliqué sur une seconde surface d'un produit.

### PRODUIT REVETU D'UN ARTICLE AUTO-ADHESIF

La présente invention a pour objet en troisième lieu un produit revêtu au niveau de sa surface d'un article auto-adhésif selon l'invention.

De préférence, ladite surface n'a pas subie de prétraitements de la surface tels que décrits précédemment.

De préférence, ladite surface présente une énergie de surface inférieure ou égale à 40 mN/m, de préférence allant de 23 à 38 mN/m, plus préférentiellement allant de 25 à 35 mN/m.

De préférence, ladite surface est lisse et homogène.

La surface du produit revêtu d'un article auto-adhésif selon l'invention peut être à base de substrats de basse énergie de surface, tels que des substrats de type polyoléfines, qui sont des substrats apolaires organiques ; ou encore des revêtements apolaires organiques de type vernis, encres ou peintures; lesdits substrats possédant une énergie de surface inférieure ou égale à 40 mN/m, de préférence allant de 23 à 38 mN/m, plus préférentiellement allant de 25 à 35 mN/m.

Les substrats de type polyoléfine peuvent être par exemple des matériaux polymériques à base de monomères et co-monomères tels que le polyéthylène (PE), le polypropylène (PP), le polyisoprène (PI), le polyisobutylène (PIB), et leurs copolymères (blocks ou statistiques), ou encore à base de polymère(s) d'oléfine(s) cyclique(s) tel(s) qu'obtenus par métathèse par ouverture de cycle (ROMP), ou encore les mélanges de ces polymères.

A titre d'exemple de polyéthylène (PE), on peut citer en particulier le polyéthylène haute densité (HDPE), le polyéthylène faible densité (LDPE), le polyéthylène faible densité linéaire et le polyéthylène ultra faible densité linéaire.

La surface du produit revêtu d'un article auto-adhésif selon l'invention peut être flexible ou rigide.

En particulier, le produit à revêtir peut présenter les mêmes propriétés de flexibilité que la couche support décrite ci-dessus, de manière à être enroulé et conditionné sous la forme d'une bobine, par exemple telle que décrite précédemment.

Alternativement, le produit à revêtir ne peut être enroulé et conditionné sous la forme d'une bobine, par exemple telle que décrite précédemment, soit du fait de sa rigidité, de sa forme ou de son épaisseur.

Les exemples suivants sont donnés à titre purement illustratif de l'invention et ne sauraient être interprétés pour en limiter la portée.

### EXEMPLES

Les ingrédients suivants ont été utilisés dans les exemples :
A titre de polymère disilylé :
   - **PDS 1 :** Polymère disilylé possédant une masse moléculaire moyenne en nombre d'environ 16 000 g/mol (ou 20kDa et un Ip d'environ 1,6 si déterminée par GPC), comprenant une chaine principale de type polyuréthane et deux groupements terminaux propylène-triméthoxysilane hydrolysables, lesdits groupements terminaux silylés étant rattachés à la chaine principale du polymère par une fonction uréthane. Ce polymère répond en particulier à la formule (I).
   - **PDS2** : Polymère disilylé possédant une masse moléculaire moyenne en nombre d'environ 37 000 g/mol (ou 38 kDa un Ip d'environ 1,9 si déterminée par GPC), comprenant une chaine principale de type polyuréthane et deux groupements terminaux propylène-triméthoxysilane hydrolysables, lesdits groupements terminaux silylés étant rattachés à la chaine principale du polymère par une fonction uréthane. Ce polymère répond en particulier à la formule (I).
   - **PDS3:** GENIOSIL^{®} STP-E 30 (disponible auprès de Wacker) : polymère disilylé possédant une masse moléculaire moyenne en nombre d'environ 18 500 g/mol (ou 22 kDa et un Ip d'environ 1,2 si déterminée par GPC), comprenant une chaine principale de type polyéther et deux groupements terminaux méthylène-triméthoxysilane hydrolysables, lesdits groupements terminaux silylés étant rattachés à la chaine principale du polymère par une fonction uréthane. Ce polymère répond en particulier à la formule (I).
   - **PDS4:** GENIOSIL^{®} STP-E 35 (disponible auprès de Wacker) : polymère disilylé possédant une masse moléculaire moyenne en nombre d'environ 18 600 g/mol (ou 22 kDa et un Ip d'environ 1,2 si déterminée par GPC), comprenant une chaine principale de type polyéther et deux groupements terminaux propylène-triméthoxysilane hydrolysables, lesdits groupements terminaux silylés étant rattachés à la chaine principale du polymère par une fonction uréthane. Ce polymère répond en particulier à la formule (I).
A titre de polymère monosilylé :
   - **PMS1** : GENIOSIL^{®}XM20 (disponible auprès de Wacker) : polymère monosilylé possédant une masse moléculaire moyenne en nombre d'environ 6 000 g/mol (ou 8 kDa si déterminée par GPC), et possède un Ip d'environ 1,1. Il comprend une chaine principale de type polyéther et un groupement terminal méthylène-méthyldiméthoxysilane hydrolysable, ledit groupement terminal silylé étant rattaché à la chaine principale du polymère par une fonction uréthane. Ce polymère répond en particulier à la formule (IIbis) dans laquelle m=0 et p=1.
   - **PMS2:** GENIOSIL^{®}XM25 (disponible auprès de Wacker) : polymère monosilylé possédant une masse moléculaire moyenne en nombre d'environ 6 000 g/mol (ou 8 kDa déterminé par GPC) et possède un Ip d'environ 1,1. Il comprend une chaine principale de type polyéther et un groupement terminal propylène-triméthoxysilane hydrolysable, ledit groupement terminal silylé étant rattaché à la chaine principale du polymère par une fonction uréthane. Ce polymère répond en particulier à la formule (IIbis) dans laquelle m=0 et p=0.
A titre de résine tackifiante :
   - **T1:** SYLVALITE^{®} RE 100 (disponible auprès de la société ARIZONA CHEMICAL) : résine de type ester de colophane et de pentaérythritol, ayant un IOH d'environ 50 mg KOH/g, une masse moléculaire moyenne en nombre d'environ 974 g/mol et un point de ramollissement de 100°C (résine tackifiante de type (iii));
   - **T2**: DERTOPHENE^{®} H 150 (disponible auprès de la société DRT): résine de type terpène phénolique, ayant un IOH d'environ 150 mg KOH/g, une masse moléculaire moyenne en nombre d'environ 700 g/mol et un point de ramollissement de 120°C ;
   - **T3:** NORSOLENE^{®} W85 (disponible auprès de la société CRAY VALLEY) : résine d'alpha méthyle styrène, ayant un IOH de 0, une masse moléculaire moyenne en nombre de 600 g/mol environ et un point de ramollissement de 85°C (résine tackifiante de type (ii));
   - **T4:** NORSOLENE^{®} W110 (disponible auprès de la société CRAY VALLEY) : résine d'alpha méthyle styrène, ayant un IOH de 0, une masse moléculaire moyenne en nombre de 750 g/mol environ et un point de ramollissement de 110°C (résine tackifiante de type (ii)) ;
   - **T5:** PICCO^{®} AR 100 (disponible auprès de la société EASTMAN) : résine obtenue par polymérisation de mélanges d'hydrocarbures aromatiques ayant principalement 9 atomes de carbone issus de coupes pétrolières, ayant un IOH de 0, une masse moléculaire moyenne en nombre de 550 g/mol et un point de ramollissement de 100°C (résine tackifiante de type (i)).
A titre de catalyseur de réticulation:
   - K-KAT^{®} 5218 (disponible auprès de la société King Industries) : contient un chélate d'aluminium.

### I - Préparation des polymères disilylés A.1)

### Synthèse de PDS1 :

Dans un réacteur en verre sont introduits :
- 961,2 g (0,1199 mole) du poly(oxypropylène) diol ACCLAIM^{®} 8200,
- 12,99 g (0,0582 mole) d'isophorone diisocyanate (IPDI), ce qui correspond à un rapport molaire des fonctions NCO/OH égal à 0,5 ; et:
- 0,29 g (correspondant à 300 ppm) d'un catalyseur de type neodécanoate de bismuth et de zinc (disponible commercialement auprès de la société Borchers, sous la dénomination Borchi Kat VP 0244).

Ce mélange est maintenu sous agitation constante à 85 °C et sous azote pendant 3 heures, jusqu'à réaction complète des fonctions NCO de l'IPDI.

Au polyuréthane à terminaisons hydroxyles ainsi obtenu sont ensuite ajoutés 26,05 g (0,1269 mole) de gamma-isocyanato-n-propyl-triméthoxysilane et le mélange est maintenu à 85°C jusqu'à disparition totale des fonctions NCO.

Le polyuréthane obtenu a une viscosité de 55 Pascal seconde (Pa.s.) environ (mesurée au viscosimètre Brookfield à 23°C, avec une aiguille 7 tournant à raison de 20 tours par minute (tr/mn)) et une masse moléculaire moyenne en nombre d'environ 16 000 g/mol (ou 20 kDa et un indice de polymolécularité d'environ 1,6 déterminée par GPC).

### Synthèse de PDS2 :

Dans un réacteur en verre sont introduits :
- 884,63 g (0,0457 mole) du poly(oxypropylène) diol ACCLAIM^{®} 18200,
- 5,10 g (0,0229 mole) d'isophorone diisocyanate (IPDI), ce qui correspond à un rapport des nombres de fonctions NCO/OH égal à 0,5 ; et:
- 300 ppm d'un catalyseur de type neodécanoate de bismuth et de zinc (disponible commercialement auprès de la société Borchers, sous la dénomination Borchi Kat VP 0244).

Ce mélange est maintenu sous agitation constante à 85 °C et sous azote pendant 3 heures, jusqu'à réaction complète des fonctions NCO de l'IPDI.

Au polyuréthane à terminaisons hydroxyles ainsi obtenu sont ensuite ajoutés 10 g (0,0474 mole) de gamma-isocyanato-n-propyl-triméthoxysilane et le mélange est maintenu à 85°C jusqu'à disparition totale des fonctions NCO.

Le polyuréthane obtenu a une viscosité de 510 Pa.s. environ (mesurée au viscosimètre Brookfield à 23°C, avec une aiguille 7 tournant à raison de 20 tr/mn) et une masse moléculaire moyenne en nombre d'environ 37 000 g/mol (ou 38 kDa un Ip d'environ 1,9 si déterminée par GPC).

### II - Préparation des compositions adhésives

Les compositions adhésives 1 à 14 et CE1 à CE8 ont été préparées en suivant le même protocole opératoire décrit ci-dessous, en utilisant les ingrédients figurant dans le tableau 1 ci-dessous. Les quantités de chaque ingrédient utilisé sont indiquées en pourcentage en poids par rapport au poids total de la composition adhésive.

Les compositions 1 à 14 correspondent à des compositions adhésives selon l'invention.

Les compositions CE1 à CE8 correspondent à des compositions adhésives comparatives. En particulier :
- les compositions CE1 et CE2 correspondent aux compositions des exemples A de la demande WO 09/106699 et EP 2 336 208 respectivement, comprenant un seul polymère disilylé A.1) et une résine tackifiante ayant un IOH supérieur à 100 mg KOH/g,
- les compositions CE3 à CE6 correspondent à des compositions comparatives comprenant un seul polymère disilylé A.1),
- les compositions CE7 et CE8 correspondent à des compositions comparatives comprenant un seul polymère monosilylé A.2).

### Protocole opératoire :

La composition adhésive est préparée en introduisant tout d'abord la résine tackifiante dans un réacteur en verre sous vide et chauffé à environ 140°C. Puis, une fois la résine fondue, le polymère silylé A.1) ou A.2) ou le mélange de polymères silylés A.1) et A.2) est ajouté.

Le mélange est agité sous vide durant 15 minutes, puis refroidi à 80°C. Le catalyseur est alors introduit. Le mélange est maintenu sous vide et sous agitation durant 10 minutes supplémentaires.

La viscosité du mélange est ensuite déterminée à 100°C, au moyen d'un viscosimètre de type Brookfield (équipé du système Thermosel destiné aux mesures de viscosité à haute température) muni d'une aiguille A28 tournant à une vitesse adaptée à la sensibilité du capteur. Pour les exemples 1 à 14 selon l'invention et les exemples comparatifs, les mélanges présentent une viscosité allant de 0,5 Pa.s. à 40 Pa.s., mesurée à 100°C.

### II - Préparation des articles auto-adhésifs

Chacune des compositions adhésives 1 à 14 et CE1 à CE8 est utilisée pour la fabrication d'un article auto-adhésif, en suivant le protocole opératoire ci-dessous.

### Protocole opératoire :

On utilise comme couche support une feuille rectangulaire de PolyEthylèneTéréphtalate (PET) d'épaisseur 50 µm et de dimensions 20 cm sur 40 cm.

On préchauffe la composition adhésive à une température proche de 90°C et on l'introduit dans une cartouche d'où l'on extrude un cordon qui est déposé près du bord de la feuille parallèlement à sa largeur.

La composition adhésive contenue dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition adhésive correspondant à un grammage de 50 g/m², ce qui représente environ une épaisseur de l'ordre de 50 µm.

La feuille de PET ainsi revêtue est alors placée dans une étuve à 120 °C durant 600 secondes pour réticulation de la composition, puis contrecollée sur une couche anti-adhérente protectrice consistant en une autre feuille de film PET dont la surface est siliconée pour servir de surface anti-adhésive, rectangulaire et de mêmes dimensions.

L'article auto-adhésif ainsi obtenue comprenant la couche adhésive réticulée sur le support PET est soumise aux tests décrits ci-après.

### III - Test de collage des articles auto-adhésifs

Les articles auto-adhésifs préparés ci-dessus sont soumis dans les mêmes conditions aux tests de collage suivant sur deux types de substrats en polyoléfine : HDPE et PP. L'énergie de surface de ces substrats en contact avec l'adhésif testé est de 27 et 29 mN/m respectivement pour le HDPE et le PP. Ces valeurs ont été déterminées à partir de la méthode de mesure décrite ci-après.

### Détermination de l'énergie de surface des substrats :

L'énergie de surface de chacun des substrats a été déterminée à partir de la mesure de l'angle de contact de solutions étalons sur la surface desdits substrats. Les substrats testés sont des plaques de HDPE ou PP de surface plane, lisse et homogène, de 15cm de long et 2,5cm de large. L'angle de contact a été mesuré pour trois solutions étalon (diiodométhane, éthylène glycol et eau) avec un appareil Digidrop muni d'un jeu de seringues destiné au dépôt des solutions étalons. L'appareil de mesure de l'angle de contact est connecté au logiciel Windrop++ fourni par la société GBX Scientific Instrument pour le calcul de l'énergie de surface du substrat à partir de l'angle de contact mesuré. Les mesures ont été réalisées à l'air libre dans une pièce à 23°C ayant un taux d'humidité relative de 50%, sous pression atmosphérique d'1 bar.

Préparation des substrats : Le substrat est fixé sur une plaque de verre de 15 cm de long et 5cm de large à l'aide d'une couche de ruban adhésif double-face de même dimensions que le substrat et recouvrant entièrement la surface dudit substrat, en faisant coïncider au moins un des angles de chacune des couches constituées par le substrat, le ruban adhésif et la plaque de verre. L'échantillon ainsi formé est lissé afin d'obtenir une surface lisse et dépourvue de bulles d'air. L'échantillon est placé sous le Digidrop de manière à ce que les seringues de dépôt font face à la surface substrat de l'échantillon et soient alignées le plus près possible du bord de l'échantillon.

Mesure de l'angle de contact : Le logiciel Windrop++ permet de lancer le programme de dépôt qui va enclencher simultanément le dépôt d'une goutte d'une solution étalon et la prise automatique d'une photo de la goutte en contact avec la surface du substrat. La photo est prise à 13 000 millisecondes (ms) pour l'eau et l'éthylène glycol, et à 2000 ms pour le diiodométhane à compter du démarrage du programme. Pour chaque solution étalon, on réalise trois dépôts. Entre chaque dépôt, on déplace manuellement l'échantillon de façon à ce que les gouttes se déposent à proximité les unes des autres sur la surface du substrat, à proximité du bord de l'échantillon. L'ordre de dépose des gouttes est le suivant : 3 gouttes d'eau, 3 gouttes d'éthylène glycol, 3 gouttes de diiodométhane.

Calcul de l'angle de contact et détermination de l'énergie de surface du substrat: A partir de chacune des prises de vue réalisée, un angle de contact est calculé avec la méthode « Manuel 2 ». On obtient ainsi pour chaque solution étalon, trois valeurs d'angle de contact. L'énergie superficielle du substrat (EN1) est calculée en appliquant le modèle d'Owen & Wendt aux valeurs d'angle de contact trouvées.

On réalise une deuxième série de mesure d'angle de contact pour chaque solution étalon. Comme précédemment, on mesure les angles de contact pour 3 gouttes de chaque solution étalon dans l'ordre sus-indiqué, puis on en déduit une deuxième valeur d'énergie de surface (EN2).

On réalise une troisième série de mesure d'angle de contact pour chaque solution étalon, puis on en déduit une troisième valeur d'énergie de surface (EN3).

L'énergie de surface du substrat est obtenue en faisant la moyenne des trois valeurs EN1, EN2 et EN3 obtenues.

### Test de pelage à 180° sur polyoléfine (HDPE, PP) :

Le pouvoir adhésif est évalué par le test de pelage (ou peel) à 180° tel que décrit dans la méthode FINAT n° 1, publiée dans le Manuel Technique FINAT 6^{ème} édition, 2001, sur polyoléfine. FINAT est la fédération internationale des fabricants et transformateurs d'étiquettes auto-adhésives. Le principe de ce test est le suivant.

Une éprouvette sous forme de bande rectangulaire (25 mm x 175 mm) est découpée dans la couche support PET revêtue de la composition réticulée constituant l'article auto-adhésif obtenu précédemment. Cette éprouvette est, après sa préparation, stockée durant 24 heures à une température de 23°C et dans une atmosphère à 50 % d'humidité relative. Elle est ensuite fixée sur les 2/3 de sa longueur (après enlèvement de la portion de couche anti-adhérente protectrice correspondante) sur un substrat constitué d'une plaque de HDPE ou PP. L'assemblage obtenu est laissé 20 minutes à température ambiante (23°C). Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

### Résultats :

Les résultats des mesures sont exprimés en N/cm et indiqués dans le tableau 2 ci-après. On observe que les compositions adhésives des exemples 1 à 14 selon l'invention permettent d'obtenir un article auto-adhésif possédant un pouvoir adhésif supérieur aux compositions adhésives comparatives des exemples CE1 à CE6. Les compositions CE7 et CE8 n'ont pas permis d'obtenir un article auto-adhésif réticulé dans le domaine souhaité et montrent la nécessité d'associer un polymère disilylé avec un polymère monosilylé.

Les excellentes performances adhésives des compositions adhésives selon l'invention sur l'ensemble des substrats de basse énergie de surface testés résultent d'un effet de synergie entre les différents ingrédients utilisés.

En particulier, grâce aux séries de comparaisons suivantes, il a été démontré que :
1) l'utilisation d'un mélange de polymères A.1) et A.2) conduit à une amélioration des performances adhésives sur l'ensemble des substrats de basse énergie de surface testés par rapport à l'utilisation d'un polymère A.1) seul :
   - série (1.1) : comparaison de la composition comparative CE3 avec chacune des compositions des Exemples 3, 4, 6, 9 et 10 selon l'invention
   - série (1.2) : comparaison de la composition comparative CE5 avec la composition de l'Exemple 13 selon l'invention,
   - série (1.3) : comparaison de la composition comparative CE6 avec la composition de l'Exemple 14 selon l'invention ;
2) l'utilisation d'un mélange de polymères A.1) et A.2) conduit à une amélioration des performances adhésives sur l'ensemble des substrats -de basse énergie de surface testés par rapport à l'utilisation d'un polymère A.2) seul :
   - série (2.1) : comparaison de la composition comparative CE7 avec chacune des compositions des Exemples 4, 10, 12, 13, 14 selon l'invention,
   - série (2.2) : comparaison de la composition comparative CE8 avec chacune des compositions des Exemples 3, 6, 9, 11 selon l'invention ;
3) l'utilisation d'une teneur plus élevée de polymère monosilylé A.2) dans le mélange de polymères A.1) et A.2) conduit à une amélioration des performances adhésives sur l'ensemble des substrats de basse énergie de surface testés :
   - série (3.1) : comparaison de la composition de l'exemple 12 et de l'exemple 11,
   - série (3.2) : comparaison de la composition de l'exemple 3 et de l'exemple 9 ;
4) l'utilisation d'un polymère disilylé A.1) de Mn plus élevé dans le mélange de polymères A.1) et A.2) conduit à une amélioration des performances adhésives sur l'ensemble des substrats de basse énergie de surface testés, pour des polymères de même nature :
   - série (4.1) : comparaison de la composition de l'exemple 12 et de l'exemple 3,
   - série (4.2) : comparaison de la composition de l'exemple 11 et de l'exemple 9 ;
5) l'utilisation d'un polymère disilylé A.1) de formule (II) dans laquelle m est non nul conduit à une amélioration des performances adhésives sur l'ensemble des substrats de basse énergie de surface testés par rapport à l'utilisation d'un polymère disilylé A.1) de formule (II) dans laquelle m est nul, à masse moléculaire moyenne en nombre et groupes terminaux silylés comparables:
   - série (5.1) : comparaison de la composition de l'exemple 4 et de l'exemple 13 ;
6) l'utilisation d'un polymère disilylé A.1) possédant des groupements terminaux dialkoxysilane, conduit à une amélioration des performances adhésives sur PP, par rapport à l'utilisation d'un polymère disilylé A.1) possédant des groupements terminaux trialkoxysilane, en mélange avec un même polymère monosilylé A.2) dialkoxysilylé :
   - série (6.1) : comparaison des compositions des exemples 14 et 13 ;
7) l'utilisation d'un polymère monosilylé A.2) ayant des groupes terminaux dialkoxysilyles conduit une amélioration des performances adhésives au moins sur PP par rapport à l'utilisation d'un polymère monosilylé A.2) ayant des groupes terminaux trialkoxysilyles, en mélange avec un même polymère disilylé A. 1 :
   - série (7.1) : comparaison de la composition de l'exemple 10 et de l'exemple 9 :
      l'utilisation d'un polymère A.2) possédant des groupements terminaux dialkoxysilane améliore l'adhésion sur HDPE et PP par rapport à l'utilisation d'un polymère A.2) possédant des groupements terminaux trialkoxysilane,
   - série (7.2) : comparaison des compositions des exemples 4 et 3 selon l'invention :
      l'utilisation d'un polymère A.2) possédant des groupements terminaux dialkoxysilane améliore l'adhésion sur PP par rapport à l'utilisation d'un polymère A.2) possédant des groupements terminaux trialkoxysilane ;
8) l'utilisation d'au moins une résine de type (i) (T5), et de préférence d'au moins une résine de type (i) et (ii) (T5+T4 ou T5+T3), conduit à une amélioration des performances adhésives au moins sur le PP par rapport à l'utilisation d'un mélange de résines tackifiantes ne comprenant pas de résine(s) de(s) type(s) précitée(s) :
   - série (7.1) : comparaison des compositions des exemples 1 et 9 selon l'invention :
      le mélange T5 et T4 améliore l'adhésion sur PP et HDPE par rapport au mélange T1 et T4,
   - série (7.2) : comparaison des compositions des exemples 2 et 4 selon l'invention :
      le mélange T5 et T4 améliore l'adhésion sur PP par rapport au mélange T1 et T4,
   - série (7.3) : comparaison des compositions des exemples 2 et 5 : le mélange T5 et T3 améliore l'adhésion sur PP par rapport au mélange T1 et T3.

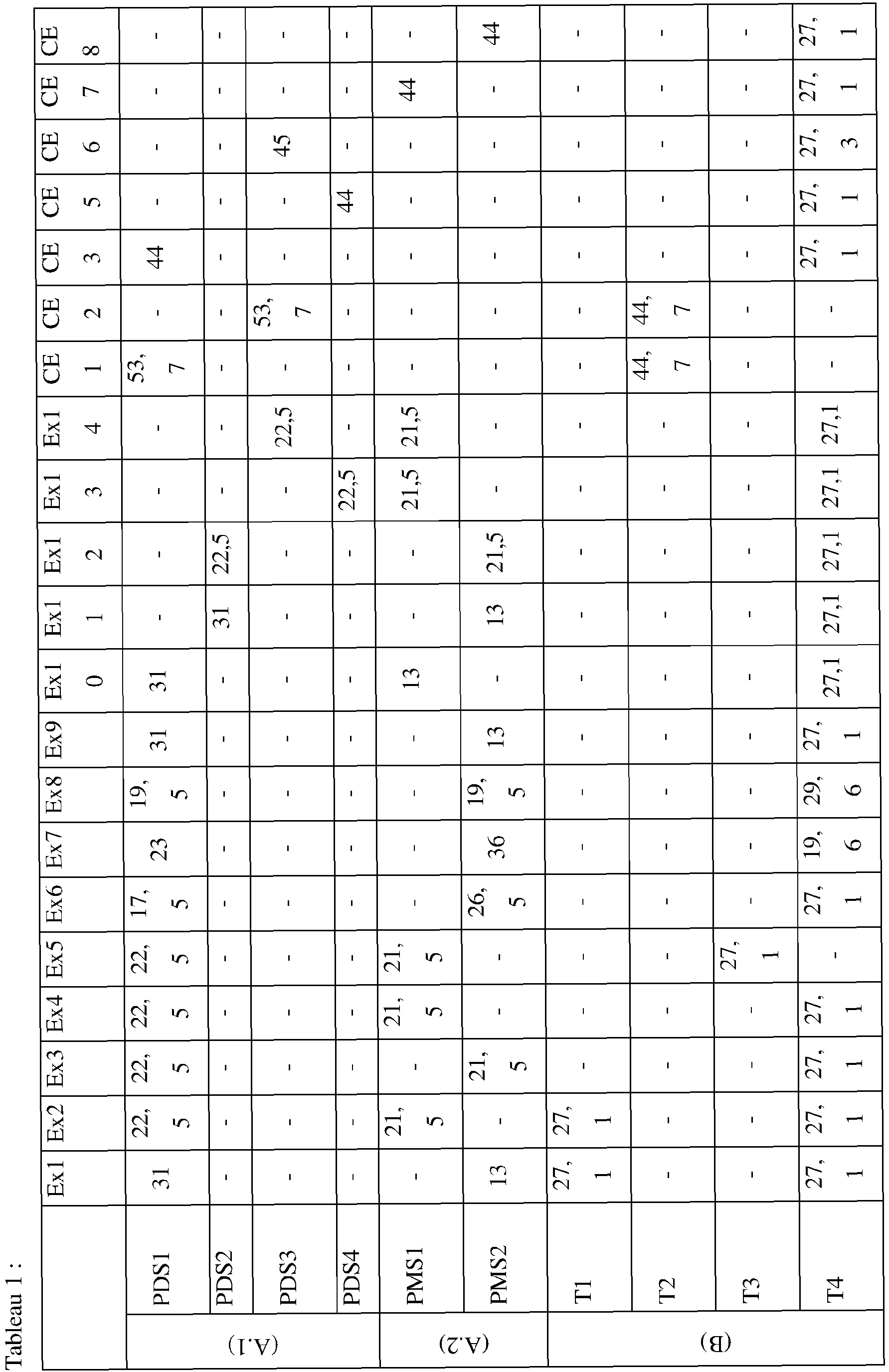

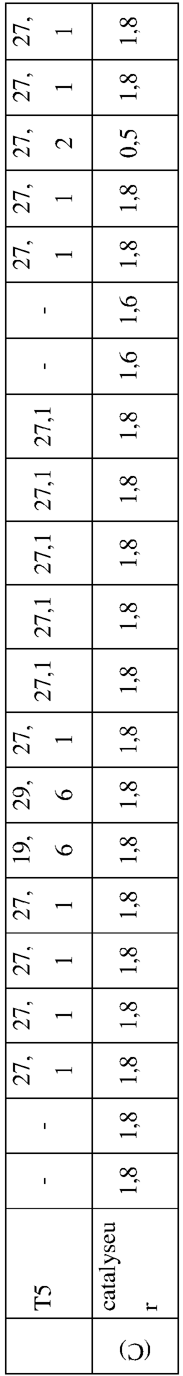

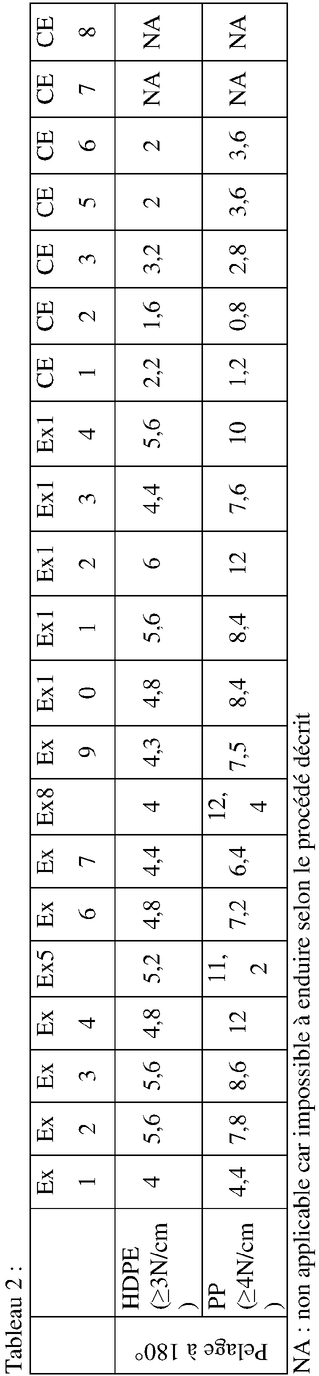

## Revendications

1. Composition adhésive comprenant :
A.1) au moins 4% en poids d'un ou plusieurs polymères polysilylés possédant une masse moléculaire moyenne en nombre (Mn) d'au moins 6 000 g/mol, et choisi parmi les polymères comprenant une chaine principale de type polyéther et/ou polyuréthane et au moins deux groupements terminaux silylés hydrolysables, lesdits groupements terminaux silylés étant rattachés à la chaine principale du polymère par une fonction uréthane ou éther (dit groupe connecteur),
A.2) au moins 13% en poids d'un ou plusieurs polymères monosilylés possédant une masse moléculaire moyenne en nombre (Mn) d'au moins 1000 g/mol, et choisi parmi les polymères comprenant une chaine principale de type polyéther et/ou polyuréthane et un groupement terminal silylé hydrolysable, ledit groupement terminal silylé étant rattaché à la chaine principale du polymère par une fonction uréthane ou éther (dit groupe connecteur),
B) au moins 25% en poids d'une ou plusieurs résines tackifiantes présentant (chacune) un indice hydroxyle inférieur ou égal à 100, et
C) au moins 0,2% d'un ou plusieurs catalyseurs de réticulation,
les teneurs en % en poids étant exprimées relativement au poids total de la composition adhésive, et la somme des teneurs de tous les ingrédients de la compositions adhésive étant égale à 100%.

2. Composition selon la revendication 1, telle que le polymère polysilylé A.1) ou l'un au moins des polymères polysilylés A.1), de préférence le polymère polysilylé A.1) ou l'ensemble des polymères polysilylés A.1), répond(ent) à l'une des formules suivantes, ou leur mélange :
- formule (I) : 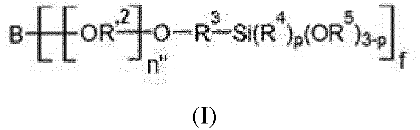 dans laquelle :
- B représente un radical divalent (pour f=2) ou trivalent (pour f=3) hydrocarboné comprenant de 2 à 66 atomes de carbone, linéaire, ramifié, cyclique, alicyclique ou aromatique, saturé ou insaturé, comprenant éventuellement un ou plusieurs hétéroatomes, tel que O, N,
- R³ représente un radical divalent alkylène linéaire ou ramifié comprenant de 1 à 6 atomes de carbone,
- R'² représente un radical divalent alkylène linéaire ou ramifié comprenant de 2 à 4 atomes de carbone,
- R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
- n" est un nombre entier non nul tel que la masse moléculaire moyenne en nombre du bloc polyéther de formule -[OR'²]_{n"} - va de 150 g/mole à 20 000 g/mole,
- p est un nombre entier égal à 0 ou 1,
- f est un nombre entier égal à 2 ou 3,
- les indices n" et f sont tels que la masse moléculaire moyenne en nombre du (des) polymère(s) polysilylé(s) A.1) est telle que définie dans la revendication 1;
- formule (II) : 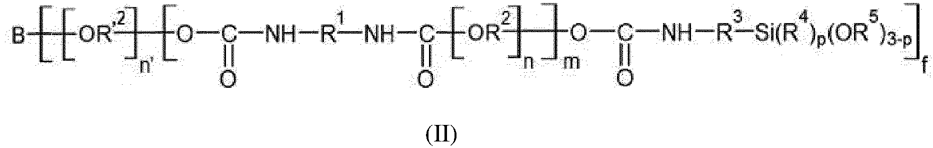 dans laquelle :
- B représente un radical divalent (pour f=2) ou trivalent (pour f=3) hydrocarboné comprenant de 2 à 66 atomes de carbone, linéaire, ramifié, cyclique, alicyclique ou aromatique, saturé ou insaturé, comprenant éventuellement un ou plusieurs hétéroatomes, tel que O, N,
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone,
- R² et R'², identiques ou différents, représentent chacun un radical divalent alkylène linéaire ou ramifié comprenant de 2 à 4 atomes de carbone,
- R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
- n est un nombre entier non nul tel que la masse moléculaire moyenne en nombre du bloc polyéther de formule -[OR²]ₙ- va de 300 g/mole à 40 000 g/mole,
- n' est un nombre entier nul ou non nul tel que la masse moléculaire moyenne en nombre du bloc polyéther de formule -[OR'²]_{n'} - va de 0 à 20 000 g/mole,
- m est un nombre entier nul ou non nul,
- p est un nombre entier égal à 0 ou 1,
- f est un nombre entier égal à 2 ou 3,
- les indices m, n, n' et f sont tels que la masse moléculaire moyenne en nombre du (des) polymère(s) polysilylé(s) A.1) est telle que définie dans la revendication 1.

3. Composition selon la revendication 1 ou 2, telle que le polymère monosilylé A.2) ou l'un au moins des polymères monosilylés A.2), de préférence le polymère monosilylé A.2) ou l'ensemble des polymères monosilylés A.2), répond(ent) à l'une des formules suivantes, ou à leur mélange :
- formule (Ibis) : 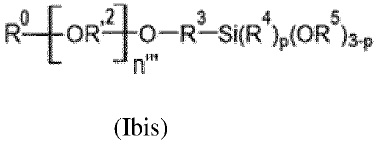 dans laquelle :
- R⁰ représente un radical divalent hydrocarboné comprenant de 1 à 60 atomes de carbone qui peut être aliphatique, aromatique ou alkyl aromatique, linéaire, ramifié ou cyclique,
- R³ représente un radical divalent alkylène linéaire ou ramifié comprenant de 1 à 6 atomes de carbone,
- R'² représente un radical divalent alkylène linéaire ou ramifié comprenant de 2 à 4 atomes de carbone,
- R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
- n"' est un nombre entier nul ou non nul tel que la masse moléculaire moyenne en nombre du bloc polyéther de formule -[OR'²]_{n'"} - va de 0 g/mole à 20 000 g/mole,
- p est un nombre entier égal à 0, 1 ou 2.
- R⁰ et n"' sont tels que la masse moléculaire moyenne en nombre du (des) polymère(s) monosilylé(s) A.2) est telle que définie dans la revendication 1;
- formule (IIbis) : 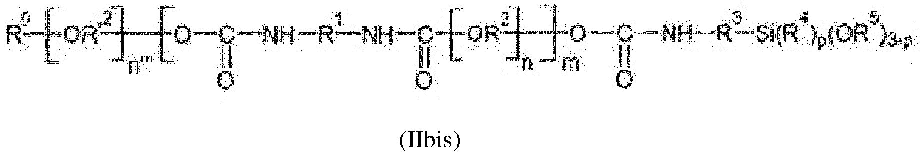 dans laquelle :
- R⁰ représente un radical divalent hydrocarboné comprenant de 1 à 60 atomes de carbone qui peut être aliphatique, aromatique ou alkyl aromatique, linéaire, ramifié ou cyclique,
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone,
- R² et R'², identiques ou différents, représentent chacun un radical divalent alkylène linéaire ou ramifié comprenant de 2 à 4 atomes de carbone,
- R⁴ et R⁵, identiques ou différents, représentent chacun un radical alkyle linéaire ou ramifié comprenant de 1 à 4 atomes de carbone, R⁴ pouvant éventuellement être engagé dans un cycle, de préférence R⁴ est un groupe méthyle,
- n est un nombre entier tel que la masse moléculaire moyenne en nombre du bloc polyéther de formule -[OR²]ₙ- va de 300 g/mole à 40 000 g/mole,
- n"' est un nombre entier nul ou non nul tel que la masse moléculaire moyenne en nombre du bloc polyéther de formule -[OR'²]_{n'"} - va de 0 à 20 000 g/mole,
- m est un nombre entier nul ou non nul,
- p est un nombre entier égal à 0, 1 ou 2.
- R⁰ et les indices m, n et n'" sont tels que la masse moléculaire moyenne en nombre du (des) polymère(s) monosilylé(s) A.2) est telle que définie dans la revendication 1.

4. Composition selon la revendication 2 ou 3, telle que le(s) polymère(s) polysilylé(s) A.1) répond(ent) à la formule (II), dans laquelle m est de préférence non nul.

5. Composition selon la revendication 3 ou 4, telle que le(s) polymère(s) monosilylé(s) A.2) répond(ent) à la formule (IIbis), dans laquelle m est de préférence nul.

6. Composition selon l'une quelconque des revendications 2 à 5, telle que p = 0.

7. Composition selon l'une quelconque des revendications 2 à 5, telle p = 1.

8. Composition selon l'une quelconque des revendications 1 à 7, telle que le(s) polymère(s) polysilylé(s) A.1) est (sont) disilylé(s).

9. Composition selon l'une quelconque des revendications 1 à 8, telle que :
- la masse moléculaire moyenne en nombre du (des) polymère(s) polysilylé(s) A.1) va de 6 000 à 55 000 g/mol, de préférence de 15 000 à 50 000 g/mol, plus préférentiellement de 20 000 à 45 000 g/mol, et
- la masse moléculaire en nombre du (des) polymère(s) monosilylé(s) A.2) va de 1 000 à 55 000 g/mol, de préférence de 2 000 à 45000 g/mol, plus préférentiellement de 3 000 à 35 000 g/mol.

10. Composition selon l'une quelconque des revendications 1 à 9, telle que la (les) résine(s) tackifiante(s) présente(nt) (chacune) un indice hydroxyle inférieur ou égal à 50, et plus préférentiellement égal à zéro, présente(nt) une masse moléculaire moyenne en nombre allant de 100 à 6 000 g/mol, de préférence de 300 à 4 000 g/mol, et est (sont) choisie(s) parmi :
(i) les résines obtenues par polymérisation ou copolymérisation, éventuellement par hydrogénation, de mélanges d'hydrocarbures aliphatiques insaturés et/ou aromatiques ayant environ 5, 9 ou 10 atomes de carbone issus de coupes pétrolières ;
(ii) les résines obtenues par un procédé comprenant la polymérisation d'alpha-méthyl styrène ou la copolymérisation d'alpha-méthyl-styrène avec d'autres monomères hydrocarbonés ;
(iii) les colophanes d'origine naturelle ou modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ou pentaérythritol; et
(iv) leurs mélanges.

11. Composition selon l'une quelconque des revendications 1 à 10, telle que :
- la teneur en polymère(s) polysilylé(s) A.1) représente de 5 à 59,8% en poids, plus préférentiellement de 15 à 54,8% en poids, et mieux encore de 20 à 44,8% en poids, du poids de la composition adhésive,
- la teneur en polymère(s) monosilylé(s) A.2) représente de 15 à 69,8% en poids, de préférence de 15 à 54,8% en poids, et mieux encore de 20 à 44,8% en poids du poids de la composition adhésive,
- la teneur en résine(s) tackifiante(s) B) va de 25 à 79,8% en poids, de préférence de 30 à 69,8% en poids, et mieux encore de 35 à 59,8% en poids, du poids de la composition adhésive,
- la teneur en catalyseur(s) de réticulation C) va de 0,2 à 4% en poids du poids de la composition adhésive.

12. Article auto-adhésif comprenant une couche support revêtue d'une couche auto-adhésive, ladite couche auto-adhésive consistant en une composition adhésive telle que définie dans l'une quelconque des revendications 1 à 11 à l'état réticulé.

13. Article auto-adhésif selon la revendication 12, susceptible d'être obtenu par le procédé comprenant les étapes suivantes :
(a) le conditionnement de la composition adhésive selon l'invention telle que définie précédemment à une température allant de 20 à 130°C ; puis
(b) l'enduction par la composition adhésive obtenue à l'étape (a) d'une surface porteuse ; puis
(c) la réticulation de la composition adhésive enduite, par chauffage à une température allant de 20 à 200°C dans un environnement gazeux où des molécules d'eau sont présentes entre 10 et 200 mg par m³ de gaz;
(d) le contre collage ou le transfert de la couche adhésive réticulée sur une couche support ou sur un film protecteur anti-adhérent, ladite couche support ou film anti-adhérent pouvant être le revers de la surface porteuse.

14. Article auto-adhésif selon la revendication 12 ou 13, **caractérisé en ce que** la couche support présente une élongation à la rupture strictement inférieure à 100% et est à base de polymères acryliques, de Polyéthylène (PE), Polypropylène (PP) orienté, non orienté ou bi-orienté, Polyimide, Polyuréthane, Polyester tel que le Polyéthylène téréphtalate (PET), ou de papier.

15. Produit revêtu au niveau de sa surface d'un article auto-adhésif telle que défini dans l'une quelconque des revendications 12 à 14, ladite surface présentant une énergie de surface inférieure ou égale à 40mN/m, de préférence allant de 23 à 38 mN/m, plus préférentiellement allant de 25 à 35 mN/m, ladite énergie de surface étant mesurée à 23°C, à 50% d'humidité relative, à pression atmosphérique de 1 bar, dans l'air.

## Patentansprüche

1. Klebstoffzusammensetzung, umfassend:
A.1) mindestens 4 Gewichts-% eines oder mehrerer polysilylierter Polymere, die ein Zahlenmittel des Molekulargewichts (Mn) von mindestens 6.000 g/mol besitzen, wobei sie aus den Polymeren ausgewählt sind, die eine Hauptkette des Typs Polyether und/oder Polyurethan und mindestens zwei hydrolysierbare silylierte endständige Gruppen umfassen, wobei die silylierten endständigen Gruppen über eine Urethan- oder Etherfunktion (welche als Bindegruppe bezeichnet wird) an die Hauptkette des Polymers gebunden sind,
A.2) mindestens 13 Gewichts-% eines oder mehrerer monosilylierter Polymere, die ein Zahlenmittel des Molekulargewichts (Mn) von mindestens 1.000 g/mol besitzen, wobei sie aus den Polymeren ausgewählt sind, die eine Hauptkette des Typs Polyether und/oder Polyurethan und eine hydrolysierbare silylierte endständige Gruppe umfassen, wobei die silylierte endständige Gruppe über eine Urethan- oder Etherfunktion (welche als Bindegruppe bezeichnet wird) an die Hauptkette des Polymers gebunden ist,
B) mindestens 25 Gewichts-% eines oder mehrerer klebrigmachender Harze, die (jeweils) eine Hydroxylzahl von höchstens 100 aufweisen, und
C) mindestens 0,2 % eines oder mehrerer Vernetzungskatalysatoren,
wobei die Gehalte in Gewichts-% unter Bezugnahme auf das Gesamtgewicht der Klebstoffzusammensetzung ausgedrückt sind und die Summe der Gehalte an sämtlichen Inhaltsstoffen der Klebstoffzusammensetzung gleich 100 % ist.

2. Zusammensetzung nach Anspruch 1, derart, dass das polysilylierte Polymer A.1) oder mindestens eines der polysilylierten Polymere A.1), vorzugsweise das polysilylierte Polymer A.1) oder die Gesamtheit der polysilylierten Polymere A.1), einer der folgenden Formeln, oder deren Mischung, entspricht/entsprechen:
- Formel (I): 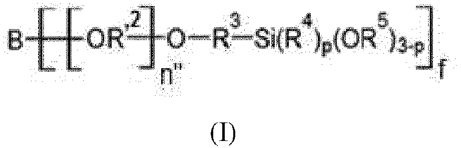 in welcher:
- B für einen zweibindigen (für f = 2) oder dreibindigen (für f = 3) Kohlenwasserstoffrest steht, der 2 bis 66 Kohlenstoffatome umfasst, wobei er geradkettig, verzweigt, zyklisch, alizyklisch oder aromatisch, gesättigt oder ungesättigt ist und möglicherweise ein oder mehrere Heteroatome wie etwa 0, N umfasst,
- R³ für einen geradkettigen oder verzweigten zweibindigen Alkylenrest steht, der 1 bis 6 Kohlenstoffatome umfasst,
- R'² für einen geradkettigen oder verzweigten zweibindigen Alkylenrest steht, der 2 bis 4 Kohlenstoffatome umfasst,
- R⁴ und R⁵, die vollkommen gleichartig oder verschiedenartig sind, jeweils für einen geradkettigen oder verzweigten Alkylrest stehen, der 1 bis 4 Kohlenstoffatome umfasst, wobei R⁴ möglicherweise Bestandteil eines Rings sein kann, wobei R⁴ vorzugsweise für eine Methylgruppe steht,
- n" für eine ganze Zahl steht, die von null verschieden und derart beschaffen ist, dass das Zahlenmittel des Molekulargewichts des Blockpolyethers mit der Formel -[OR'²]_{n"}- im Bereich von 150 g/mol bis 20.000 g/mol liegt,
- p für eine ganze Zahl steht, die gleich 0 oder 1 ist,
- f für eine ganze Zahl steht, die gleich 2 oder 3 ist,
- die tiefgestellten Zeichen n" und f derart beschaffen sind, dass das Zahlenmittel des Molekulargewichts des/der polysilylierten Polymers/Polymere A.1) der Begriffsbestimmung in Anspruch 1 entspricht;
- Formel (II): 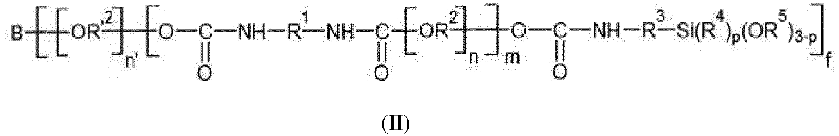 in welcher:
- B für einen zweibindigen (für f = 2) oder dreibindigen (für f = 3) Kohlenwasserstoffrest steht, der 2 bis 66 Kohlenstoffatome umfasst, wobei er geradkettig, verzweigt, zyklisch, alizyklisch oder aromatisch, gesättigt oder ungesättigt ist und möglicherweise ein oder mehrere Heteroatome wie etwa 0, N umfasst,
- R¹ für einen zweibindigen Kohlenwasserstoffrest steht, der 5 bis 15 Kohlenstoffatome umfasst, wobei er aromatisch oder aliphatisch, geradkettig, verzweigt oder zyklisch sein kann,
- R³ für einen geradkettigen oder verzweigten zweibindigen Alkylenrest steht, der 1 bis 6 Kohlenstoffatome umfasst,
- R² und R'², die vollkommen gleichartig oder verschiedenartig sind, jeweils für einen geradkettigen oder verzweigten zweibindigen Alkylenrest stehen, der 2 bis 4 Kohlenstoffatome umfasst,
- R⁴ und R⁵, die vollkommen gleichartig oder verschiedenartig sind, jeweils für einen geradkettigen oder verzweigten Alkylrest stehen, der 1 bis 4 Kohlenstoffatome umfasst, wobei R⁴ möglicherweise Bestandteil eines Rings sein kann, wobei R⁴ vorzugsweise für eine Methylgruppe steht,
- n für eine ganze Zahl steht, die von null verschieden und derart beschaffen ist, dass das Zahlenmittel des Molekulargewichts des Blockpolyethers mit der Formel -[OR²]ₙ- im Bereich von 300 g/mol bis 40.000 g/mol liegt,
- n' für eine ganze Zahl steht, die gleich null oder von null verschieden und derart beschaffen ist, dass das Zahlenmittel des Molekulargewichts des Blockpolyethers mit der Formel -[OR'²]_{n'}- im Bereich von 0 g/mol bis 20.000 g/mol liegt,
- m für eine ganze Zahl steht, die gleich null oder von null verschieden ist,
- p für eine ganze Zahl steht, die gleich 0 oder 1 ist,
- f für eine ganze Zahl steht, die gleich 2 oder 3 ist,
- die tiefgestellten Zeichen m, n, n' und f derart beschaffen sind, dass das Zahlenmittel des Molekulargewichts des/der polysilylierten Polymers/Polymere A.1) der Begriffsbestimmung in Anspruch 1 entspricht.

3. Zusammensetzung nach Anspruch 1 oder 2, derart, dass das monosilylierte Polymer A.2) oder mindestens eines der monosilylierten Polymere A.2), vorzugsweise das monosilylierte Polymer A.2) oder die Gesamtheit der monosilylierten Polymere A.2), einer der folgenden Formeln, oder deren Mischung, entspricht/entsprechen:
- Formel (Ibis): 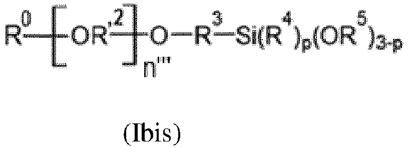 in welcher:
- R⁰ für einen zweibindigen Kohlenwasserstoffrest steht, der 1 bis 60 Kohlenstoffatome umfasst, wobei er aliphatisch, aromatisch oder alkylaromatisch, geradkettig, verzweigt oder zyklisch sein kann,
- R³ für einen geradkettigen oder verzweigten zweibindigen Alkylenrest steht, der 1 bis 6 Kohlenstoffatome umfasst,
- R^{'2} für einen geradkettigen oder verzweigten zweibindigen Alkylenrest steht, der 2 bis 4 Kohlenstoffatome umfasst,
- R⁴ und R⁵, die vollkommen gleichartig oder verschiedenartig sind, jeweils für einen geradkettigen oder verzweigten Alkylrest stehen, der 1 bis 4 Kohlenstoffatome umfasst, wobei R⁴ möglicherweise Bestandteil eines Rings sein kann, wobei R⁴ vorzugsweise für eine Methylgruppe steht,
- n‴ für eine ganze Zahl steht, die gleich null oder von null verschieden und derart beschaffen ist, dass das Zahlenmittel des Molekulargewichts des Blockpolyethers mit der Formel -[OR'²]_{n‴}- im Bereich von 0 g/mol bis 20.000 g/mol liegt,
- p für eine ganze Zahl steht, die gleich 0, 1 oder 2 ist,
- R⁰ und n‴ derart beschaffen sind, dass das Zahlenmittel des Molekulargewichts des/der monosilylierten Polymers/Polymere A.2) der Begriffsbestimmung in Anspruch 1 entspricht;
- Formel (IIbis): 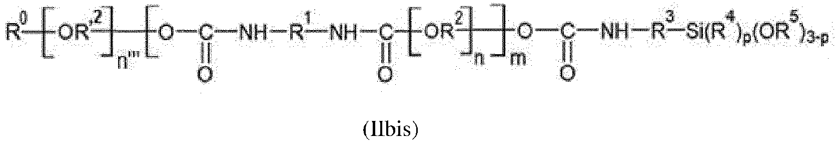 in welcher:
- R⁰ für einen zweibindigen Kohlenwasserstoffrest steht, der 1 bis 60 Kohlenstoffatome umfasst, wobei er aliphatisch, aromatisch oder alkylaromatisch, geradkettig, verzweigt oder zyklisch sein kann,
- R¹ für einen zweibindigen Kohlenwasserstoffrest steht, der 5 bis 15 Kohlenstoffatome umfasst, wobei er aromatisch oder aliphatisch, geradkettig, verzweigt oder zyklisch sein kann,
- R³ für einen geradkettigen oder verzweigten zweibindigen Alkylenrest steht, der 1 bis 6 Kohlenstoffatome umfasst,
- R² und R^{'2}, die vollkommen gleichartig oder verschiedenartig sind, jeweils für einen geradkettigen oder verzweigten zweibindigen Alkylenrest stehen, der 2 bis 4 Kohlenstoffatome umfasst,
- R⁴ und R⁵, die vollkommen gleichartig oder verschiedenartig sind, jeweils für einen geradkettigen oder verzweigten Alkylrest stehen, der 1 bis 4 Kohlenstoffatome umfasst, wobei R⁴ möglicherweise Bestandteil eines Rings sein kann, wobei R⁴ vorzugsweise für eine Methylgruppe steht,
- n für eine ganze Zahl steht, die derart beschaffen ist, dass das Zahlenmittel des Molekulargewichts des Blockpolyethers mit der Formel -[OR²]ₙ- im Bereich von 300 g/mol bis 40.000 g/mol liegt,
- n‴ für eine ganze Zahl steht, die gleich null oder von null verschieden und derart beschaffen ist, dass das Zahlenmittel des Molekulargewichts des Blockpolyethers mit der Formel -[OR'²]_{n‴}- im Bereich von 0 g/mol bis 20.000 g/mol liegt,
- m für eine ganze Zahl steht, die gleich null oder von null verschieden ist,
- p für eine ganze Zahl steht, die gleich 0, 1 oder 2 ist,
- R⁰ und die tiefgestellten Zeichen m, n und n‴ derart beschaffen sind, dass das Zahlenmittel des Molekulargewichts des/der monosilylierten Polymers/Polymere A.2) der Begriffsbestimmung in Anspruch 1 entspricht.

4. Zusammensetzung nach Anspruch 2 oder 3, derart, dass das/die polysilylierte(n) Polymer(e) A.1) der Formel (II) entspricht/entsprechen, in welcher m vorzugsweise von null verschieden ist.

5. Zusammensetzung nach Anspruch 3 oder 4, derart, dass das/die monosilylierte(n) Polymer(e) A.2) der Formel (IIbis) entspricht/entsprechen, in welcher m vorzugsweise gleich null ist.

6. Zusammensetzung nach einem beliebigen der Ansprüche 2 bis 5, derart, dass p = 0 ist.

7. Zusammensetzung nach einem beliebigen der Ansprüche 2 bis 5, derart, dass p = 1 ist.

8. Zusammensetzung nach einem beliebigen der Ansprüche 1 bis 7, derart, dass das/die polysilylierte(n) Polymer(e) A.1) disilyliert ist/sind.

9. Zusammensetzung nach einem beliebigen der Ansprüche 1 bis 8, derart, dass:
- das Zahlenmittel des Molekulargewichts des/der polysilylierte(n) Polymers/Polymere A.1) im Bereich von 6.000 bis 55.000 g/mol, vorzugsweise von 15.000 bis 50.000 g/mol, stärker bevorzugt von 20.000 bis 45.000 g/mol liegt, und
- das Zahlenmittel des Molekulargewichts des/der monosilylierte(n) Polymers/Polymere A.2) im Bereich von 1.000 bis 55.000 g/mol, vorzugsweise von 2.000 bis 45.000 g/mol, stärker bevorzugt von 3.000 bis 35.000 g/mol liegt.

10. Zusammensetzung nach einem beliebigen der Ansprüche 1 bis 9, derart, dass das/die klebrigmachende(n) Harz(e) (jeweils) einen Hydroxylwert aufweist/aufweisen, welcher höchstens 50 beträgt und vorzugsweise gleich null ist, ein Zahlenmittel des Molekulargewichts aufweist/aufweisen, welches im Bereich von 100 bis 6.000 g/mol, vorzugsweise 300 bis 4.000 g/mol liegt, wobei es/sie aus den folgenden ausgewählt ist/sind:
(i) den Harzen, die durch Polymerisation oder Copolymerisation, möglicherweise durch Hydrierung, von Gemischen aus ungesättigten aliphatischen und/oder aromatischen Kohlenwasserstoffen, die ungefähr 5, 9 oder 10 Kohlenstoffatome haben und aus Erdölfraktionen stammen, erhalten wurden;
(ii) den Harzen, die durch ein Verfahren erhalten wurden, welches die Polymerisation von alpha-Methylstyrol oder die Copolymerisation von alpha-Methylstyrol mit anderen kohlenwasserstoffartigen Monomeren umfasst;
(iii) den Kolophoniumsorten natürlicher Herkunft oder modifizierter Art, wie etwa beispielsweise dem Kolophonium, wie es aus Kiefernbaumharz gewonnen wird, dem Kolophonium, wie es aus den Wurzeln des Baumen gewonnen wird, sowie deren Derivaten, welche hydriert, dimerisiert, polymerisiert oder mit Monoalkoholen oder Polyolen, wie etwa Glycerin oder Pentaerythrit, verestert sind; und
(iv) deren Mischungen.

11. Zusammensetzung nach einem beliebigen der Ansprüche 1 bis 10, derart, dass:
- der Gehalt an polysilyliertem/polysilylierten Polymer (en) A.1) 5 bis 59, 8 Gewichts-%, stärker bevorzugt 15 bis 54,8 Gewichts-%, und besser noch 20 bis 44,8 Gewichts-% des Gewichts der Klebstoffzusammensetzung ausmacht,
- der Gehalt an monosilyliertem/monosilylierten Polymer(en) A.2) 15 bis 69,8 Gewichts-%, vorzugsweise 15 bis 54,8 Gewichts-%, und besser noch 20 bis 44,8 Gewichts-% des Gewichts der Klebstoffzusammensetzung ausmacht,
- der Gehalt an klebrigmachendem/klebrigmachenden Harz(en) B) im Bereich von 25 bis 79,8 Gewichts-%, vorzugsweise 30 bis 69,8 Gewichts-%, und besser noch 35 bis 59,8 Gewichts-% des Gewichts der Klebstoffzusammensetzung liegt,
- der Gehalt an Vernetzungskatalysator(en) C) im Bereich von 0,2 bis 4 Gewichts-% des Gewichts der Klebstoffzusammensetzung liegt.

12. Selbstklebender Gegenstand, der eine Trägerschicht umfasst, welche mit einer selbstklebenden Schicht überzogen ist, wobei die selbstklebende Schicht aus einer Klebstoffzusammensetzung gemäß der Begriffsbestimmung in einem beliebigen der Ansprüche 1 bis 11 in vernetztem Zustand besteht.

13. Selbstklebender Gegenstand nach Anspruch 12, wobei er durch das Verfahren erhalten werden kann, welches die folgenden Schritte umfasst:
(a) Konditionieren der erfindungsgemäßen Klebstoffzusammensetzung gemäß der obigen Begriffsbestimmung bei einer Temperatur im Bereich von 20 bis 130 °C; und anschließend
(b) Überziehen einer unterstützenden Fläche mit der Klebstoffzusammensetzung, wie sie in Schritt (a) erhalten wurde; und anschließend
(c) Vernetzen der als Überzug aufgebrachten Klebstoffzusammensetzung, durch Erhitzen bei einer Temperatur im Bereich von 20 bis 200 °C in einer gasförmigen Umgebung, in welcher Wassermoleküle zu 10 bis 200 mg pro m³ an Gas vorliegen;
(d) Kaschieren oder Übertragen der vernetzten Klebstoffschicht auf eine Trägerschicht oder auf eine Antihaft-Schutzfolie, wobei es sich bei der Trägerschicht oder die Antihaftfolie um die Rückseite der unterstützenden Fläche handeln kann.

14. Selbstklebender Gegenstand nach Anspruch 12 oder 13, **dadurch gekennzeichnet, dass** die Trägerschicht eine Reißdehnung aufweist, die streng niedriger als 100 % ist, und auf Acrylpolymeren, Polyethylen (PE), verstrecktem, ungerecktem oder längs und quer verstrecktem Polypropylen (PP), Polyimid, Polyurethan, Polyester wie etwa Polyethylenterephthalat (PET) oder auf Papier basiert.

15. Produkt, das an seiner Oberfläche mit einem selbstklebenden Gegenstand gemäß der Begriffsbestimmung in einem beliebigen der Ansprüche 12 bis 14 beschichtet ist, wobei die Oberfläche eine Oberflächenenergie aufweist, die höchstens 40 mN/m beträgt, wobei sie vorzugsweise im Bereich von 23 bis 38 mN/m, stärker bevorzugt im Bereich von 25 bis 35 mN/m liegt, wobei die Oberflächenenergie bei 23 °C, bei 50 % relativer Luftfeuchtigkeit, bei einem Atmosphärendruck von 1 bar an der Luft gemessen wird.

## Claims

1. Adhesive composition comprising:
A.1) at least 4% by weight of one or more polysilylated polymers having a number-average molecular weight (Mn) of at least 6000 g/mol and selected from polymers comprising a polyether-type and/or polyurethane-type main chain and at least two hydrolysable silylated end groups, said silylated end groups being attached to the main chain of the polymer by a urethane function or ether function (referred to as a connecting group),
A.2) at least 13% by weight of one or more monosilylated polymers having a number-average molecular weight (Mn) of at least 1000 g/mol and selected from polymers comprising a polyether-type and/or polyurethane-type main chain and a hydrolysable silylated end group, said silylated end group being attached to the main chain of the polymer by a urethane function or ether function (referred to as a connecting group),
B) at least 25% by weight of one or more tackifying resins having (in each case) a hydroxyl value of less than or equal to 100, and
C) at least 0.2% of one or more crosslinking catalysts,
the % contents by weight being expressed relative to the total weight of the adhesive composition, and the sum total of the contents of all the ingredients of the adhesive composition being equal to 100%.

2. Composition according to Claim 1, such that the polysilylated polymer A.1) or at least one of the polysilylated polymers A.1), preferably the polysilylated polymer A.1) or all of the polysilylated polymers A.1), correspond(s) to one of the formulas below, or a mixture thereof:
- formula (I): 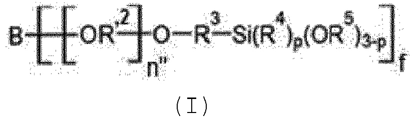 in which:
- B represents a linear, branched, cyclic, alicyclic or aromatic, saturated or unsaturated, divalent (where f = 2) or trivalent (where f = 3) hydrocarbon radical containing from 2 to 66 carbon atoms, optionally containing one or more heteroatoms, such as O or N,
- R³ represents a linear or branched divalent alkylene radical containing from 1 to 6 carbon atoms,
- R'² represents a linear or branched divalent alkylene radical containing from 2 to 4 carbon atoms,
- R⁴ and R⁵, which are identical or different, each represent a linear or branched alkyl radical containing from 1 to 4 carbon atoms, it being optionally possible for R⁴ to be part of a ring, R⁴ preferably being a methyl group,
- n" is a non-zero integer, such that the number-average molecular weight of the polyether block of formula -[OR'²]_{n"}- ranges from 150 g/mol to 20 000 g/mol,
- p is an integer equal to 0 or 1,
- f is an integer equal to 2 or 3,
- the indices n" and f are such that the number-average molecular weight of the polysilylated polymer(s) A.1) is as defined in Claim 1;
- formula (II): 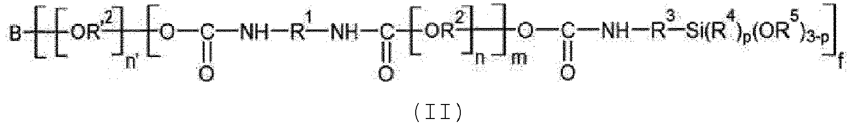 in which:
- B represents a linear, branched, cyclic, alicyclic or aromatic, saturated or unsaturated, divalent (where f = 2) or trivalent (where f = 3) hydrocarbon radical containing from 2 to 66 carbon atoms, optionally containing one or more heteroatoms, such as O or N,
- R¹ represents a divalent hydrocarbon radical containing from 5 to 15 carbon atoms, which may be aromatic or aliphatic, linear, branched or cyclic,
- R³ represents a linear or branched divalent alkylene radical containing from 1 to 6 carbon atoms,
- R² and R^{'2}, which are identical or different, each represent a linear or branched divalent alkylene radical containing from 2 to 4 carbon atoms,
- R⁴ and R⁵, which are identical or different, each represent a linear or branched alkyl radical containing from 1 to 4 carbon atoms, it being optionally possible for R⁴ to be part of a ring, R⁴ preferably being a methyl group,
- n is a non-zero integer, such that the number-average molecular weight of the polyether block of formula -[OR²]ₙ- ranges from 300 g/mol to 40 000 g/mol,
- n' is a zero or non-zero integer, such that the number-average molecular weight of the polyether block of formula -[OR'²]_{n'}- ranges from 0 to 20 000 g/mol,
- m is a zero or non-zero integer,
- p is an integer equal to 0 or 1,
- f is an integer equal to 2 or 3,
- the indices m, n, n' and f are such that the number-average molecular weight of the polysilylated polymer(s) A.1) is as defined in Claim 1.

3. Composition according to Claim 1 or 2, such that the monosilylated polymer A.2) or at least one of the monosilylated polymers A.2), preferably the monosilylated polymer A.2) or all of the monosilylated polymers A.2), correspond(s) to one of the formulas below, or a mixture thereof:
- formula (Ia): 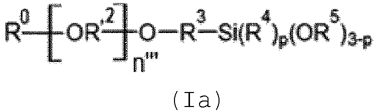 in which:
- R⁰ represents a divalent hydrocarbon radical containing from 1 to 60 carbon atoms, which may be aliphatic, aromatic or alkylaromatic, linear, branched or cyclic,
- R³ represents a linear or branched divalent alkylene radical containing from 1 to 6 carbon atoms,
- R'² represents a linear or branched divalent alkylene radical containing from 2 to 4 carbon atoms,
- R⁴ and R⁵, which are identical or different, each represent a linear or branched alkyl radical containing from 1 to 4 carbon atoms, it being optionally possible for R⁴ to be part of a ring, R⁴ preferably being a methyl group,
- n‴ is a zero or non-zero integer, such that the number-average molecular weight of the polyether block of formula -[OR'²]_{n‴}- ranges from 0 g/mol to 20 000 g/mol,
- p is an integer equal to 0, 1 or 2,
- R⁰ and n‴ are such that the number-average molecular weight of the monosilylated polymer(s) A.2) is as defined in Claim 1;
- formula (IIa): 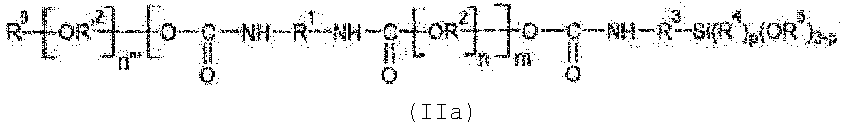 in which:
- R⁰ represents a divalent hydrocarbon radical containing from 1 to 60 carbon atoms, which may be aliphatic, aromatic or alkylaromatic, linear, branched or cyclic,
- R¹ represents a divalent hydrocarbon radical containing from 5 to 15 carbon atoms, which may be aromatic or aliphatic, linear, branched or cyclic,
- R³ represents a linear or branched divalent alkylene radical containing from 1 to 6 carbon atoms,
- R² and R^{'2}, which are identical or different, each represent a linear or branched divalent alkylene radical containing from 2 to 4 carbon atoms,
- R⁴ and R⁵, which are identical or different, each represent a linear or branched alkyl radical containing from 1 to 4 carbon atoms, it being optionally possible for R⁴ to be part of a ring, R⁴ preferably being a methyl group,
- n is an integer, such that the number-average molecular weight of the polyether block of formula -[OR²]ₙ- ranges from 300 g/mol to 40 000 g/mol,
- n‴ is a zero or non-zero integer, such that the number-average molecular weight of the polyether block of formula -[OR'²]_{n‴}- ranges from 0 to 20 000 g/mol,
- m is a zero or non-zero integer,
- p is an integer equal to 0, 1 or 2,
- R⁰ and the indices m, n and n‴ are such that the number-average molecular weight of the monosilylated polymer(s) A.2) is as defined in Claim 1.

4. Composition according to Claim 2 or 3, such that the polysilylated polymer(s) A.1) correspond(s) to the formula (II), in which m is preferably non-zero.

5. Composition according to Claim 3 or 4, such that the monosilylated polymer(s) A.2) correspond(s) to the formula (IIa), in which m is preferably zero.

6. Composition according to any one of Claims 2 to 5, such that p = 0.

7. Composition according to any one of Claims 2 to 5, such that p = 1.

8. Composition according to any one of Claims 1 to 7, such that the polysilylated polymer(s) A.1) is (are) disilylated.

9. Composition according to any one of Claims 1 to 8, such that:
- the number-average molecular weight of the polysilylated polymer(s) A.1) ranges from 6000 to 55 000 g/mol, preferably from 15 000 to 50 000 g/mol, more preferably from 20 000 to 45 000 g/mol, and
- the number-average molecular weight of the monosilylated polymer(s) A.2) ranges from 1000 to 55 000 g/mol, preferably from 2000 to 45 000 g/mol, more preferably from 3000 to 35 000 g/mol.

10. Composition according to any one of Claims 1 to 9, such that the tackifying resin(s) has/have (in each case) a hydroxyl value of less than or equal to 50, and more preferably equal to zero, has/have a number-average molecular weight ranging from 100 to 6000 g/mol, preferably from 300 to 4000 g/mol, and is (are) selected from:
(i) the resins obtained by polymerization or copolymerization, optionally by hydrogenation, of mixtures of unsaturated aliphatic and/or aromatic hydrocarbons having approximately 5, 9 or 10 carbon atoms originating from petroleum cuts;
(ii) the resins obtained by a process comprising the polymerization of α-methylstyrene or the copolymerization of α-methylstyrene with other hydrocarbon monomers;
(iii) rosins of natural origin or modified rosins, such as for example rosin extracted from pine gum, wood rosin extracted from tree roots and hydrogenated, dimerized or polymerized derivatives thereof or derivatives thereof esterified monoalcohols or polyols, such as glycerol or pentaerythritol; and
(iv) mixtures thereof.

11. Composition according to any one of Claims 1 to 10, such that:
- the content of polysilylated polymer(s) A.1) represents from 5% to 59.8% by weight, more preferably from 15% to 54.8% by weight and better still from 20% to 44.8% by weight, of the weight of the adhesive composition,
- the content of monosilylated polymer(s) A.2) represents from 15% to 69.8% by weight, preferably from 15% to 54.8% by weight and better still from 20% to 44.8% by weight, of the weight of the adhesive composition,
- the content of tackifying resin(s) B) ranges from 25% to 79.8% by weight, preferably from 30% to 69.8% by weight and better still from 35% to 59.8% by weight, of the weight of the adhesive composition,
- the content of crosslinking catalyst(s) C) ranges from 0.2% to 4% by weight of the weight of the adhesive composition.

12. Self-adhesive article comprising a backing layer coated with a self-adhesive layer, said self-adhesive layer consisting of an adhesive composition as defined in any one of Claims 1 to 11 in the crosslinked state.

13. Self-adhesive article according to Claim 12 that may be obtained by the process comprising the following steps:
(a) conditioning at a temperature ranging from 20 to 130°C of the adhesive composition of the invention as previously defined; then
(b) coating of a support surface with the adhesive composition obtained in step (a); then
(c) crosslinking of the coating of the adhesive composition by heating at a temperature ranging from 20 to 200°C in a gaseous environment in which water molecules are present at between 10 and 200 mg per m³ of gas;
(d) laminating or transferring the crosslinked adhesive layer onto a backing layer or onto a non-stick protective film, it being possible for said backing layer or non-stick film to be the reverse of the support surface.

14. Self-adhesive article according to Claim 12 or 13, **characterized in that** the backing layer has an elongation at break strictly lower than 100% and is based on acrylic polymers, polyethylene (PE), oriented, non-oriented or biaxially oriented polypropylene (PP), polyimide, polyurethane, polyester, such as polyethylene terephthalate (PET), or paper.

15. Product coated on its surface with a self-adhesive article as defined in any one of Claims 12 to 14, said surface having a surface energy of less than or equal to 40 mN/m, preferably ranging from 23 to 38 mN/m, more preferably ranging from 25 to 35 mN/m, said surface energy being measured at 23°C, at 50% relative humidity, at atmospheric pressure of 1 bar, in air.
